# EUROPEAN PATENT APPLICATION

(11) **EP 4 494 762 A1**
(43) Date of publication of application: **22.01.2025**
(21) Application number: 23187091.6
(22) Date of filing: 21.07.2023
(51) Int. Cl.: B01L 3/00, B01L 7/00, B01L 9/00, B03C 1/28, B01F 33/452, G01N 35/00

(54) **METHODS AND DEVICES FOR PROCESSING MICROPARTICLES**

(71) Applicant: Blink AG, 07747 Jena (DE)
(72) Inventor: Albrecht, Alexander, 07743 Jena (DE); Dees, Stefan, 07751 Rothenstein (DE); Fökel, Corina, 07745 Jena (DE); Hubold, Stephan, 07745 Jena (DE); Kühn, Stefan, 077459 Jena (DE); Lemuth, Oliver, 05543 Jena (DE); Schulz, Torsten, 07749 Jena (DE); Tuchscheerer, Jens, 07745 Jena (DE); Wolff, Alrik, 99425 Weimar (Tierfurt) (DE); Ermantraut, Eugen, 07749 Jena (DE)
(74) Representative: Engelhard, Markus

(57) **Abstract**

The present invention relates to a method for processing microparticles and to a chamber for processing microparticles. Furthermore, the present invention relates to a device for performing the method for processing microparticles. Moreover, the present invention relates to a chamber for incubating and detecting microparticles and to a process for accommodating microparticles in a dense packing arrangement. Finally, the present invention also relates to a liquid handling and processing tool for establishing a fluidic connection to or from a chamber and/or for effecting a flow of liquid to or from a chamber.

## Description

### FIELD OF THE INVENTION

The present invention relates to a method for processing microparticles and to a chamber for processing microparticles. Furthermore, the present invention relates to a device for performing the method for processing microparticles. Moreover, the present invention relates to a chamber for incubating and detecting microparticles and to a process for accommodating microparticles in a dense packing arrangement. Finally, the present invention also relates to a liquid handling and processing tool for establishing a fluidic connection to or from a chamber and/or for effecting a flow of liquid to or from a chamber.

### BACKGROUND OF THE INVENTION

Microparticles, such as beads, are increasingly being used in a wide variety of assays. They are being used in microfabricated flow cytometers, in enzyme immunoassays and nucleic acid amplification reactions, amongst others. Microparticles are also used as reaction compartments themselves, each microparticle acting as a reaction space in which a chemical reaction, such as an amplification reaction, takes place, see for example WO2018/122162 A1. Such microparticles, also sometimes referred to as "nanoreactor beads" typically undergo a series of process steps, including loading, washing, binding, exposing, performing a desired reaction and detecting. Performance of any of these methods, steps and assays relies on efficient methodology to process microparticles in a swift and reliable manner, being able to reproducibly expose them to suitable reagents, buffers and reaction conditions, and thereafter possibly being able to also transfer them to various reaction compartments.

However, there remains a need in the art for efficient methodologies and apparatus(es) for processing microparticles. There is also a need in the art for methodologies and apparatus(es) for incubating and detecting microparticles. There is furthermore a need for methodology for accommodating microparticles in a dense packing arrangement. In particular, the processing of so called "nanoreactor beads" requires exquisite process control not provided by currently known technical solutions. Especially there is a need for being able to perform microparticle-based biological assays using self-contained integrated cartridges allowing for hands-off sample-to-answer workflows.

The present invention addresses these needs and allows for a swift, reliable, reproducible, and efficient handling of microparticles in a plethora of environments.

### SUMMARY OF THE INVENTION

In a first aspect, the present invention relates to a method for processing magnetic microparticles, in particular for exposing magnetic microparticles to a liquid and/or for generating a dispersion of magnetic microparticles in a liquid, said method comprising the steps:
a) Providing, in any order, a first liquid, a plurality of magnetic microparticles, and a chamber having a volume for receiving a liquid and a plurality of magnetic microparticles therein; said chamber further comprising a freely movable permanent magnet situated within said volume;
b) introducing, in any order, said first liquid and said plurality of magnetic microparticles into said volume of said chamber, and allowing said plurality of magnetic microparticles to be immersed in and distributed within said first liquid and to be attracted to, and, preferably, to adhere to said freely movable permanent magnet;
c) generating a user-definable magnetic field, preferably a user-definable electromagnetic field, outside of said chamber such that said generated user-definable magnetic field, preferably said user-definable electromagnetic field, exerts a magnetic force on said permanent magnet situated within said volume, such that said permanent magnet is held at a defined fixed position within said volume;
d) changing said user-definable magnetic field, preferably said user-definable electromagnetic field, and thus the magnetic force exerted thereby, such that said permanent magnet rotates in order to align with said magnetic field, preferably said electromagnetic field, and such that shear forces act upon said magnetic microparticles which are therefore moved within said volume, wherein, preferably, during such movement, a majority of said plurality of magnetic microparticles, preferably all of said plurality of magnetic microparticles, become detached from said permanent magnet, distributed and dispersed within said first liquid.

In one embodiment, said user-definable magnetic field is a user-definable electromagnetic field.

In one embodiment, in step d), said changing said user-definable magnetic field, preferably said user-definable electromagnetic field, involves a change of at least one of:
- position,
- polarity, when the magnetic field is a direct current (DC) electromagnetic field,
- frequency, when the magnetic field is an alternating current (AC) electromagnetic field,
   and
- strength,

of said user-definable magnetic field, preferably of said user-definable electromagnetic field, preferably a change of position, more preferably a change of position and polarity, more preferably a change of position, polarity and frequency, of said user-definable magnetic field, preferably of said electromagnetic field.

In one embodiment, step d) is performed a number of n times, wherein n is an integer in the range of from 1 to 1000, preferably 1 to 500, more preferably 1 to 200, even more preferably 1 to 100, and most preferably wherein n is selected from 1, 2, 3, 4, 5, 6, 7, 8, 9, 10, 11, 12, 13, 14, 15, 16, 17, 18,19, 20, 21, 22, 23, 24, 25, 26, 27, 28, 29, 30,31, 32,33, 34, 35, 36, 37,38,39,40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99 and 100.

In one embodiment, said magnetic field is an electromagnetic field, and said method further comprises the step:
e*) ending step d), and either: maintaining said user-definable electromagnetic field constant, or switching said user-definable electromagnetic field off;
   and
immediately after reaching a constant user-definable electromagnetic field or after switching said used-definable electromagnetic field off, physically separating said plurality of magnetic microparticles from said permanent magnet before said plurality of magnetic microparticles adhere to said permanent magnet, wherein such physical separation occurs by either removing said plurality of magnetic microparticles immersed in and distributed within said first liquid from said volume, before said plurality of magnetic microparticles adhere to said permanent magnet, or by removing said permanent magnet from said volume, before said plurality of magnetic microparticles adhere to said permanent magnet; whereby, by such removal of said plurality of magnetic microparticles or of said permanent magnet, said magnetic microparticles remain dispersed in said first liquid.

In one embodiment, said magnetic field is an electromagnetic field, and said method further comprises the step:
e) ending step d), and either: maintaining said user-definable electromagnetic field constant for a sufficient time allowing said plurality of magnetic microparticles to adhere to said permanent magnet again and such that said permanent magnet is held at a defined fixed position within said volume,
   or
switching said user-definable electromagnetic field off for a sufficient time allowing said plurality of magnetic microparticles to adhere to said permanent magnet again and such that said permanent magnet sinks to and resides on a bottom of said chamber.

In one embodiment, involving step e), said method further comprises the steps:
f) Removing said first liquid from said volume, whilst said plurality of magnetic microparticles adhere to said permanent magnet and whilst said permanent magnet is held at a defined fixed position within said volume or resides on a bottom of said chamber, thereby separating said first liquid from said plurality of magnetic microparticles which remain adhered to said permanent magnet;
g) Providing a second liquid different from said first liquid and introducing said second liquid into said volume, and allowing said permanent magnet and said plurality of magnetic microparticles adhered to it, to be immersed in said second liquid.

In one embodiment, involving steps f) and g), said method further comprises the step:
if step e) is ending step d) and maintaining said user-definable electromagnetic field constant:
h) continuing to hold said permanent magnet at a defined fixed position within said volume by maintaining said user-definable electromagnetic field constant;
or if step e) is ending step d) and switching said user-definable electromagnetic field off:
h*) generating a user-definable electromagnetic field outside of said chamber again, such that said generated user-definable electromagnetic field exerts a magnetic force on said permanent magnet situated within said volume, such that said permanent magnet is held at a defined position within said volume.

In one embodiment, involving step h) or step h^{∗}), said method further comprises the step:
i) changing said user-definable electromagnetic field and thus the magnetic force exerted thereby, such that said permanent magnet rotates in order to align with said electromagnetic field, and such that shear forces act upon said magnetic microparticles which are therefore moved within said volume, wherein, preferably, during such movement, a majority of said plurality of magnetic microparticles, more preferably, all of said plurality of magnetic microparticles, become detached from said permanent magnet, distributed and dispersed within said second liquid; wherein, preferably, in step i) said changing said user-definable electromagnetic field involves a change of position, more preferably a change of position and polarity, more preferably a change of position, polarity and frequency, of said user-definable electromagnetic field.

In one embodiment, involving step i), said method further comprises the step:
j) ending step i), and either: maintaining said user-definable electromagnetic field constant, again,
or
switching said user-definable electromagnetic field off, again;
and
immediately after reaching a constant user-definable electromagnetic field or after switching said user-definable electromagnetic field off, again;
physically separating said plurality of magnetic microparticles from said permanent magnet before said plurality of magnetic microparticles adhere to said permanent magnet, wherein such physical separation occurs by either removing said plurality of magnetic microparticles distributed and dispersed within said second liquid from said volume, before said plurality of magnetic microparticles adhere to said permanent magnet, or by removing said permanent magnet from said volume, before said plurality of magnetic microparticles adhere to said permanent magnet; whereby, by such removal of said plurality of magnetic microparticles or of said permanent magnet, said magnetic microparticles remain dispersed in said second liquid.

In one embodiment, said chamber is a tube-like chamber having at least one wall, wherein said volume for receiving a liquid and a plurality of magnetic microparticles is enclosed by said at least one wall, wherein said chamber further comprises an upper end which may, optionally, be closed by a cap or a seal.

In one embodiment, said tube-like chamber furthermore has a longitudinal axis, wherein said volume for receiving a liquid and a plurality of magnetic microparticles extends along said longitudinal axis of said chamber, wherein said chamber further comprises a lower end configured to be reversibly opened and closed by a valve, said lower end acting as an inlet for liquid into said volume, or acting as an inlet and outlet for liquid into and from said volume; wherein said chamber further has an upper region located below and adjacent to said upper end formed by an upper part of said at least one wall, and wherein said upper region of said chamber comprises a permanent opening located in said at least one wall.

In one embodiment, said volume of said chamber has a shape of a truncated cone, wherein a narrower end of said truncated cone is located at said lower end of said chamber, and a wider end of said truncated cone is located at said upper end of said chamber.

In one embodiment, said first liquid is an aqueous liquid having an aqueous phase, and said second liquid, if and when provided in accordance with step g), is a non-aqueous liquid having a non-aqueous phase, preferably an oil phase.

In a further aspect, the present invention relates to a chamber 1 for processing magnetic microparticles, configured to be used in a method as defined herein, wherein said chamber has a volume 1.1 for receiving a liquid and a plurality of magnetic microparticles therein, a longitudinal axis and at least one wall 1.2; wherein said volume for receiving a liquid and a plurality of magnetic microparticles therein extends along said longitudinal axis of said chamber and is enclosed by said at least one wall; wherein said chamber further comprises an upper end 1.3 which may, optionally, be closed by a cap or seal 1.3.1, and a lower end 1.4 configured to be reversibly opened and closed by a valve; said lower end acting as an inlet for liquid into said volume, or acting as an inlet and outlet for liquid into and from said volume; wherein said chamber further has an upper region 1.3.2 located below and adjacent to said upper end and formed by an upper part 1.2.1 of said at least one wall, and wherein said upper region of said chamber comprises a permanent opening 1.3.3 located in said at least one wall; wherein said chamber further comprises a freely movable permanent magnet 1.5 situated within said volume.

In one embodiment, said chamber is a tube-like chamber and has a shape of a truncated cone, wherein a narrow end 1.4.1 of said truncated cone is located at said lower end of said chamber, and a wide end 1.4.2 of said truncated cone is located at said upper end of said chamber.

In one embodiment, said permanent opening located in said upper region of said chamber is configured to act as an inlet of gas, in particular air, or as an outlet of gas or liquid; wherein said permanent opening either is a an opening without a closure, allowing free access and exit, of matter, to and from said volume of said chamber, or it is an opening comprising a filter, such filter preferably being configured to withhold particles > 100µm, or being configured to be self-sealing upon contact with liquid.

In a further aspect, the present invention relates to a device 2 for performing the method for processing magnetic microparticles as defined herein, said device comprising a chamber for processing magnetic microparticles 1 as defined herein, an external magnet 2.1 and an actuator 2.2; wherein said external magnet is located in vicinity to said chamber for processing magnetic microparticles, such that it exerts a magnetic force on said freely movable permanent magnet situated within said volume of said chamber, and such that said freely movable permanent magnet is held at a defined fixed position within said volume; wherein said external magnet is an electromagnet or a permanent magnet; wherein a positioning of said external magnet in relation to said chamber is achieved by said actuator.

In yet a further aspect, the present invention also relates to a chamber 3 for incubating and detecting microparticles, especially magnetic microparticles, in particular for performing and detecting a chemical/biochemical reaction using said microparticles, e.g. an amplification reaction using said microparticles, said chamber for incubating and detecting microparticles being a bipartite chamber and comprising:
- a first compartment 3.1 having a first volume 3.1.1, said first compartment being configured for a process of concentrating microparticles within said first volume in a suspension of said microparticles in a liquid surrounding said microparticles, said process of concentrating within said first volume making use of a density difference between said microparticles and said liquid surrounding said microparticles; said first compartment having an inlet opening 3.1.2 and an outlet opening 3.1.3 allowing the in-and outflow of a liquid or suspension into and out of said first volume, respectively;
- a second compartment 3.2 having a second volume 3.2.1, said second compartment being configured for accommodating said concentrated microparticles within said second volume in a dense packing arrangement, said second compartment being configured for thermal incubation and detection of said microparticles arranged in a dense packing arrangement; said second compartment having an inlet opening 3.2.2 and an outlet opening 3.2.3 allowing the in- and outflow of a liquid or suspension into and out of said second volume, respectively, wherein said inlet opening and said outlet opening have a reversibly closing inlet valve 3.2.2.1 and outlet valve 3.2.3.1, respectively, allowing for the reversible closing of said inlet opening 3.2.2 and outlet opening 3.2.3, respectively, and thus for sealing of said second volume 3.2.1 if both valves are closed;
wherein said first 3.1 and said second compartment 3.2 are fluidically connected with each other through said inlet opening 3.2.2 of said second compartment, allowing for the flow of a suspension of concentrated microparticles from the first volume into the second volume if said inlet valve 3.2.2.1 is open.

In one embodiment, said first compartment configured for a process of concentrating microparticles within said first volume, is either a riser pipe or a down pipe, each of said riser pipe and said down pipe having an upper end 3.1.4 and a lower end 3.1.5, wherein, if said first compartment is a riser pipe, said riser pipe is fluidically connected to said inlet opening 3.2.2 of said second compartment at said upper end 3.1.4 of said riser pipe via said inlet valve 3.2.2.1 of said second compartment and said outlet opening of said first compartment 3.1.3, and wherein, if said first compartment is a down pipe, said down pipe is fluidically connected to said inlet opening 3.2.2 of said second compartment at said lower end 3.1.5 of said down pipe via said inlet valve 3.2.2.1 of said second compartment and said outlet opening of said first compartment 3.1.3.

In one embodiment, said second compartment comprises a frame 3.2.4 encompassing said second volume 3.2.1, said frame having side walls 3.2.4.1, 3.2.4.1', an upper wall 3.2.4.2 and a lower wall 3.2.4.3 located opposite to said upper wall, said lower wall preferably being parallel to said upper wall; said second volume 3.2.1 being enclosed by said side walls 3.2.4.1, 3.2.4.1', said upper 3.2.4.2 and said lower wall 3.2.4.3; wherein one of said upper wall and said lower wall, preferably said upper wall, is a transparent wall configured to be interrogated by an optical sensor; and wherein the other of said upper wall and said lower wall, preferably said lower wall, is a wall having low heat conduction resistivity and is configured to be contacted by a temperature regulating device; wherein, preferably, a distance between said upper wall and said lower wall is in the range of from 10 um to 500 um, more preferably, in the range of from 20 um to 300 um, more preferably, in the range of from 50 um to 250 um, more preferably 50 um to 200um, and even more preferably 100 um to 200 um.

In one embodiment, said inlet opening 3.2.2 and said outlet opening 3.2.3 are formed by or comprise an elastomeric material, and wherein said inlet valve 3.2.2.1 and said outlet valve 3.2.3.1 comprise first closing means and second closing means, respectively, configured to be independently pressed against or inserted into said inlet opening and said outlet opening, respectively, and to thereby squeeze said elastomeric material and to thereby reversibly close said inlet opening and said outlet opening in a pressure tight manner, allowing for a build-up of pressure in said second compartment, wherein, preferably, said first closing means and second closing means are independently selected from rods, bars, sticks, strips, pillars, clamps, clips, and clasps.

In one embodiment, said upper and said lower wall of said second volume are held apart by at least one spacer pillar 3.2.4.4 situated within said second volume and being in contact with said upper and lower wall, thereby preventing said upper and lower wall from collapsing; wherein, preferably, said upper wall and said lower wall are held apart by two, three, four, five or more spacer pillars situated within said second volume which are evenly distributed in said second volume and which are in contact with said upper and lower wall, thereby preventing said upper and lower wall from collapsing.

In one embodiment, said outlet opening 3.2.3 of said second volume is connected to a conduit 3.2.5 that is permanently open and that serves as a vent; wherein, preferably, said conduit comprises a filter 3.2.5.1 configured to withhold particles > 100µm, or being configured to be self-sealing upon contact with liquid.

In one embodiment of the chamber for processing as defined herein, or of the chamber for incubating and detecting as defined herein, said chamber further comprises a plurality of magnetic microparticles 5, preferably dispersed in a liquid, which is an aqueous phase or a non-aqueous phase when said chamber is a chamber for processing magnetic microparticles, and which is a non-aqueous phase when said chamber is a chamber for incubating and detecting microparticles.

In yet a further aspect, the present invention also relates to a liquid handling and processing tool 4 for establishing a fluidic connection to or from a chamber and/or for effecting a flow of liquid to or from a chamber, said liquid handling and processing tool comprising:
- a housing 4.1 including a central space 4.1.1 and a plurality of chambers 4.1.2, 4.1.2', 4.1.2" for holding reagents or receiving liquids being arranged around said central space 4.1.1;
- a fluid displacement chamber 4.2 having an upper 4.2.1 and a lower end 4.2.2, said fluid displacement chamber encompassing a volume 4.2.3 for receiving, handling and moving a liquid, said volume 4.2.3 for receiving and handling a liquid having an upper part 4.2.3.1 and an adjacent lower part 4.2.3.2, said upper part 4.2.3.1 having a cylindrical shape, said adjacent lower part 4.2.3.2 having a shape of a cone or truncated cone, said cone or truncated cone being positioned upside-down within said fluid displacement chamber 4.2 such that a narrow part 4.2.3.2.1 of said cone or truncated cone is located at said lower end 4.2.2 of said fluid displacement chamber and a wide part 4.2.3.2.2 of said cone or truncated cone transitions into said upper part 4.2.3.1 of said volume;
   said fluid displacement chamber 4.2 further having a movable piston 4.2.4 located in said upper part 4.2.3.1 of said volume 4.2.3 and snugly fitting therein, said piston being dimensioned such that it is movable within said upper part 4.2.3.1 of said volume, but is not movable into or within said adjacent lower part 4.2.3.2 of said volume;
   wherein said fluid displacement chamber 4.2 is located in said central space 4.1.1 of said housing 4.1, and said plurality of chambers 4.1.2, 4.1.2', 4.1.2" are arranged around said fluid displacement chamber 4.2;
- a valve 4.3 located at the lower end 4.2.2 of said fluid displacement chamber 4.2 and allowing to establish a single fluidic connection from said fluid displacement chamber 4.2 to a selected chamber of the plurality of chambers 4.1.2, 4.1.2', 4.1.2".

In one embodiment,
- said housing 4.1 further comprises at least one interface 4.1.3 for fluidically connecting a separate chamber for processing microparticles 1 as defined herein, to said housing 4.1 "processing interface"; and/or said housing 4.1 further comprises at least one interface 4.1.4 for fluidically connecting a separate chamber for incubating and detecting microparticles 3 as defined herein, to said housing 4.1 "incubating interface";
- wherein said valve 4.3 located at the lower end 4.2.2 of said fluid displacement chamber 4.2 allows to establish a single fluidic connection from said fluid displacement chamber 4.2 to either: a selected chamber of the plurality of chambers 4.1.2, 4.1.2', 4.1.2", or to said at least one interface 4.1.3 for fluidically connecting said separate chamber for processing microparticles 1 as defined herein, or to said at least one interface 4.1.4 for fluidically connecting said separate chamber for incubating and detecting microparticles 3 as defined herein.

In one embodiment, said valve 4.3 located at the lower end 4.2.2 of said fluid displacement chamber 4.2 is configured to establish a series of single fluidic connections, namely one single fluidic connection at a given time, wherein, in said series of single fluidic connections, one single fluidic connection is established after another, wherein said one single fluidic connection is from said fluid displacement chamber 4.2 to a selected chamber of the plurality of chambers 4.1.2, 4.1.2', 4.1.2" or to one of said interfaces 4.1.3, 4.1.4, wherein preferably said valve 4.3 is a rotary valve.

In one embodiment, the liquid handling and processing tool further comprises a chamber for processing microparticles 1 as defined herein, wherein said chamber for processing microparticles 1 is fluidically connected to said processing interface 4.1.3.

In one embodiment, the liquid handling and processing tool further comprises a chamber for incubating and detecting microparticles 3 as defined herein, wherein said chamber for incubating and detecting microparticles 3 is fluidically connected to said incubating interface 4.1.4.

In one embodiment, the liquid handling and processing tool further comprises a chamber for processing microparticles 1 as defined herein, wherein said chamber for processing microparticles 1 is fluidically connected to said processing interface 4.1.3; and further comprises a chamber for incubating and detecting microparticles 3 as defined herein, wherein said chamber for incubating and detecting microparticles 3 is fluidically connected to said incubating interface 4.1.4.

In one embodiment, the liquid handling and processing tool further comprises a plurality of magnetic microparticles 5; wherein, preferably, said magnetic microparticles are located either in said chamber for processing microparticles 1 or in said chamber for incubating and detecting microparticles 3.

In one embodiment, the liquid handling and processing tool further comprises an aqueous phase and, separate therefrom, a non-aqueous phase.

In yet a further aspect, the present invention also relates to a process for accommodating microparticles in a dense packing arrangement in a volume of a chamber for incubating and detecting microparticles 3, the process comprising:
a) providing, in any order, a chamber for incubating and detecting microparticles 3 as defined herein, and a plurality of microparticles 5 dispersed in a liquid; wherein preferably, said liquid is a non-aqueous liquid, more preferably having an oil phase;
b) introducing said plurality of microparticles 5 dispersed in said liquid into said first compartment 3.1 of said chamber for incubating and detecting microparticles 3, and concentrating said microparticles in said first volume 3.1.1 of said first compartment 3.1 by making use of a density difference between said microparticles and said liquid surrounding said microparticles;
c) accommodating said plurality of microparticles 5 in a dense packing arrangement in said second volume 3.2.1 of said second compartment 3.2 of said chamber for incubating and detecting microparticles 3, by ejecting said concentrated microparticles from said first volume 3.1.1 of said first compartment 3.1 and introducing them into said second volume 3.2.1 of said second compartment 3.2 through said inlet opening 3.2.2; closing said outlet opening 3.2.3 when a first portion of said plurality of microparticles have reached said second volume 3.2.1 or said outlet opening3.2.3, whilst continuing to eject said plurality of microparticles from said first volume 3.1.1 of said first compartment 3.1 into said second volume 3.2.1, thereby increasing a pressure within said second compartment 3.2, and closing said inlet opening 3.2.2 when all of said plurality of microparticles have been introduced into said second compartment 3.2.

In one embodiment, for step b), a density of each of said microparticles is chosen such that it is different from a density of said liquid in which said microparticles are dispersed, and step b) involves allowing said microparticles to accumulate at an upper end 3.1.4 of said first volume 3.1 if said density of each of said microparticles is smaller than the density of said liquid in which said microparticles are dispersed; or step b involves allowing said microparticles to accumulate at a lower end 3.1.5 of said first volume 3.1 if said density of each of said microparticles is larger than the density of said liquid in which said microparticles are dispersed.

In one embodiment, said dense packing arrangement of step c) is a monolayer of microparticles, said microparticles being closely packed within said monolayer.

In one embodiment, said chamber for incubating and detecting microparticles 3 is a chamber as defined herein, and comprises a frame 3.2.4 encompassing said second volume 3.2.1, said frame 3.2.4 having side walls 3.2.4.1, 3.2.4.1', an upper wall 3.2.4.2 and a lower wall 3.2.4.3 located opposite to said upper wall 3.2.4.2, said lower and upper wall being parallel to each other; said second volume 3.2.1 being enclosed by said side walls 3.2.4.1, 3.2.4.1', said upper 3.2.4.2 and said lower wall 3.2.4.3; wherein one of said upper wall 3.2.4.2 and said lower wall 3.2.4.3 is a transparent wall configured to be interrogated by an optical sensor; and wherein the other of said upper and lower wall is a wall having low heat conduction resistivity and is configured to be contacted by a temperature regulating device;
wherein a number of microparticles dispersed in said liquid is chosen such that it does not exceed the maximum number of microparticles that can be arranged in a monolayer between said upper 3.2.4.2 and said lower wall 3.2.4.3 in said second compartment 3.2 which monolayer has the closest possible packing; or a number of microparticles dispersed in said liquid is chosen such that the microparticles, when arranged in a monolayer in the closest possible packing between said upper 3.2.4.2 and said lower wall 3.2.4.3 in said second compartment 3.2, cover an area that is equal to or smaller than an area provided by said upper wall 3.2.4.2 or said lower wall 3.2.4.2.

### PREFERRED ASPECTS AND EMBODIMENTS OF THE INVENTION

In a first aspect, the present invention relates to a method for processing microparticles, in which, in particular magnetic microparticles are exposed to a liquid and/or in which a dispersion of magnetic microparticles is generated. Such method comprises the steps of
a) Providing, in any order, a first liquid, a plurality of magnetic microparticles, and a chamber having a volume for receiving a liquid and a plurality of magnetic microparticles therein; wherein the chamber further comprising a freely movable permanent magnet situated within said volume;
b) introducing, in any order, said first liquid and said plurality of magnetic microparticles into said volume of said chamber, and allowing said plurality of magnetic microparticles to be immersed in and distributed within said first liquid and to be attracted to, and, preferably, to adhere to said freely movable permanent magnet;
c) generating a user-definable magnetic field, preferably a user-definable electromagnetic field, outside of said chamber such that said generated user-definable magnetic field, preferably said user-definable electromagnetic field, exerts a magnetic force on said permanent magnet situated within said volume, such that said permanent magnet is held at a defined fixed position within said volume;
d) changing said user-definable magnetic field, preferably said user-definable electromagnetic field, and thus the magnetic force exerted thereby, such that said permanent magnet rotates in order to align with said magnetic field, preferably said electromagnetic field, and such that shear forces act upon said magnetic microparticles which are therefore moved within said volume, wherein, preferably, during such movement, a majority of said plurality of magnetic microparticles, preferably all of said plurality of magnetic microparticles, become detached from said permanent magnet, and become distributed and dispersed within said first liquid.

The result of performing such method steps a) - d) is that said microparticles become exposed to a liquid and intermittently mixed therewith, as a result of which a dispersion of such microparticles within said liquid is generated. The chamber that is provided in a) comprises a freely movable permanent magnet that is situated within the volume of said chamber. It should be noted that, although said permanent magnet is freely movable within the volume of said chamber, typically in preferred embodiments, it is permanently situated within the volume of said chamber and is an integral part thereof. Preferably, it is not taken out of said chamber at all.

In preferred embodiments, when, during step b) the first liquid and the plurality of magnetic microparticles are introduced into said volume of said chamber, such magnetic microparticles become immersed in the first liquid and distributed therein, and they are also attracted to said freely movable permanent magnet that is situated within the volume of said chamber. Because the microparticles are magnetic, typically, they will then therefore eventually also adhere to said freely movable permanent magnet. As a result of such free movability of said permanent magnet within said chamber, any magnetic field generated outside of said chamber will be capable of exerting a magnetic force on the permanent magnet and will therefore move, align and/or hold said permanent magnet at a defined fixed position within said volume of said chamber (step c)). When, subsequently, during step d) the user- definable magnetic field, preferably a user-definable electromagnetic field outside of said chamber is changed, for example with respect to its position, its strengths, its polarity or its frequency, the magnetic force exerted by said magnetic field will change, as a result of which the permanent magnet will move, shift and/or rotate in order to adapt to such change of the magnetic field and to realign with such changed magnetic field. As a result of such movement, shift, or rotation, there will be shear forces that act upon the magnetic microparticles, as a result of which such magnetic microparticles are therefore moved within the volume of the chamber. If such magnetic microparticles had previously been attached/adhered to said permanent magnet, some or all of these previously attached/adhered magnetic microparticles will become detached from said permanent magnet and will become distributed and dispersed within the first liquid. The result of this step will therefore be a dispersion of magnetic microparticles within said first liquid.

In one preferred embodiment, the external user-definable magnetic field that is generated outside of said chamber in step c), and that is changed in step d) is a user-definable electromagnetic field.

In one embodiment, in step d), the changing said user-definable magnetic, preferably electromagnetic, field, involves a change of at least one of:
- position,
- polarity (when the magnetic field is a direct current (DC) electromagnetic field),
- frequency (the magnetic field is an alternating current (AC) electromagnetic field), and
- strength,
of said user-definable magnetic, preferably electromagnetic, field, wherein such change, preferably, is a change of position, more preferably a change of position and polarity, more preferably, a change of position, polarity and frequency of such field.

In one embodiment, step d) is performed a number of n times, as a result of which there occur n changes of said user-definable magnetic field. This leads to a repeated action of shear forces in the magnetic microparticles, as a result of which they are moved within the volume of said chamber for extended periods of time. Typically, n is an integer in the range of from 1 to 1000, preferably 1 to 500, more preferably 1 to 200, even more preferably 1 to 100.

In one embodiment, said magnetic field is an electromagnetic field, and the method further comprises the step:
e^{∗}) ending step d), and either: maintaining said user-definable electromagnetic field constant, or switching said user-definable electromagnetic field off; and immediately after reaching a constant user-definable electromagnetic field or after switching said user-definable electromagnetic field off, physically separating said plurality of magnetic microparticles from said permanent magnet before said plurality of magnetic microparticles adhere to said permanent magnet (again). In this embodiment, a physical separation occurs by either removing the plurality of magnetic microparticles immersed in and distributed within said first liquid from said volume, for example by aspirating said liquid, including said microparticles, from said chamber, for example by pipetting, suction, or other means of exerting a negative pressure on such liquid including said microparticles. Alternatively, such liquid may also be removed from said volume by ejecting said liquid therefrom, for example by means of a pump or other means to exert a positive pressure on said liquid. Alternatively, albeit less preferred, such physical separation of said plurality of magnetic microparticles from said permanent magnet may also occur by removal of said permanent magnet from said volume. This is less preferred, because typically, the freely movable permanent magnet is intended to be permanently located within said chamber, whereas said liquid including said plurality of magnetic microparticles may be easily removed from such chamber and be further processed elsewhere, for example in another chamber located in the vicinity of the (present) processing chamber. The dispersion of magnetic microparticles within said first liquid can subsequently be used and further processed or acted upon elsewhere.

The embodiment of said method for processing magnetic microparticles which, in addition to steps a) - d) also comprises step e^{∗}) is an embodiment of said method which results in a dispersion of magnetic microparticles in a first liquid, which dispersion can subsequently be used or further processed for other purposes. Step e^{∗}) is a harvesting step resulting in a dispersion of magnetic microparticles in a first liquid.

Alternatively, the method, comprising steps a) - d) may further comprise step e) (but not step e*)) in which, either said user-definable electromagnetic field is maintained constant for a sufficient time allowing said plurality of magnetic microparticles to adhere to said permanent magnet again and such that said permanent magnet is held at a defined fixed position within said volume; or said user-definable electromagnetic field is switched off for a sufficient time allowing said plurality of magnetic microparticles to adhere to said permanent magnet again and such that said permanent magnet sinks to and resides on a bottom of said chamber. This embodiment of the method, comprising step e) but not step e^{∗}), results in said plurality of magnetic microparticles being adhered to the permanent magnet again within said chamber. Depending on whether the user-definable electromagnetic field is maintained constant or switched off, the permanent magnet may be located in different positions within said volume of said chamber. For example, a constant electromagnetic field may hold said permanent magnet at any defined fixed position within said volume. If, however, said electromagnetic field is switched off, then said permanent magnet will sink to a bottom of said chamber and will reside thereon. Typically, said chamber comprises an upper end which may be closed by a cap or seal, and a lower end which is configured to be reversibly opened and closed by a valve, wherein said lower end acts as an inlet for liquid into said volume or as an inlet and outlet for liquid into and from said volume of said chamber. The aforementioned bottom of said chamber to which said permanent magnet will sink when the electromagnetic field is switched off, is located at said lower end of said chamber.

In the embodiment of said method which comprises step e), it is subsequently possible to separate said first liquid from said volume of said chamber. In such embodiment, said method further comprises the steps:
f) Removing said first liquid from said volume, whilst said plurality of magnetic microparticles adhere to said permanent magnet and whilst said permanent magnet is held at a defined fixed position within said volume or resides on a bottom of said chamber, thereby separating said first liquid from said plurality of magnetic microparticles which remain adhered to said permanent magnet;
g) Providing a second liquid different from said first liquid and introducing said second liquid into said volume of said chamber, and thereby allowing said permanent magnet and said plurality of magnetic microparticles adhered to it, to be exposed and/or immersed in said second liquid. In such embodiment, said method may further comprise the step:
   If step e) is ending step d) and if said user-definable electromagnetic field is maintained constant:
      h) continuing to hold said permanent magnet at a defined fixed position within said volume by maintaining said user-definable electromagnetic field constant;
   or if step e) is ending step d) and if said user-definable electromagnetic field is switching off:
      h*) generating a user-definable electromagnetic field outside of said chamber again, such that said generated user-definable electromagnetic field exerts a magnetic force on said permanent magnet situated within said volume, such that said permanent magnet is held at a defined position within said volume.

In yet a further, more specific embodiment, said method may further comprise the step:
i) changing said user-definable electromagnetic field and thus the magnetic force exerted thereby, such that said permanent magnet rotates in order to align with said electromagnetic field, and such that shear forces act upon said magnetic microparticles which are therefore moved within said volume, wherein, preferably, during such movement, a majority of said plurality of magnetic microparticles, more preferably, all of said plurality of magnetic microparticles, become detached from said permanent magnet, and become distributed and dispersed within said second liquid; wherein, preferably, in step i) said changing said user-definable electromagnetic field involves a change of position, more preferably a change of position and polarity, more preferably a change of position, polarity and frequency, of said user-definable electromagnetic field.

In one embodiment of said method which comprises step i) it is preferred that step i) is performed a number of m times, wherein m is an integer in the range of from 1 to 1000, preferably 1 to 500, more preferably 1 to 200, even more preferably 1 to 100, and most preferably, wherein m is selected from 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99 and 100.

Again, such change of said user-definable electromagnetic field will lead to a change of magnetic force exerted thereby on said magnetic microparticles such that shear forces act upon said magnetic microparticles, as a result of which, they become moved within said volume, wherein, during such movement, a majority of said plurality of magnetic microparticles, more preferably, all of said plurality of magnetic microparticles become detached from said permanent magnet, become distributed and dispersed within said second liquid.

The embodiment of the method for processing microparticles which comprises step i) may also further comprise another step, namely:
j) ending step i), and either: maintaining said user-definable electromagnetic field constant, again, or
switching said user-definable electromagnetic field off, again;
   and
immediately after reaching a constant user-definable electromagnetic field or after switching said user-definable electromagnetic field off, again;
physically separating said plurality of magnetic microparticles from said permanent magnet before said plurality of magnetic microparticles adhere to said permanent magnet, wherein such physical separation occurs by either removing said plurality of magnetic microparticles distributed and dispersed within said second liquid from said volume before said plurality of magnetic microparticles adhere to said permanent magnet, or by removing said permanent magnet from said volume, before said plurality of magnetic microparticles adhere to said permanent magnet; whereby, by such removal of said plurality of magnetic microparticles or of said permanent magnet, said magnetic microparticles remain dispersed in said second liquid.

This particular embodiment is another step of harvesting a dispersion of magnetic microparticles in a liquid, this time said second liquid. Removal of said magnetic microparticles from said volume of said chamber may occur by any suitable means allowing for the dispersion of magnetic microparticles in said second liquid to be removed from said volume. For example, this may be an aspiration, such as pipetting, suction, or other means to exert a negative pressure on said liquid, or alternatively, this may be an ejection of said dispersion, i. e. of said second liquid and said magnetic microparticles dispersed therein, from said volume of said chamber. Such ejection may occur by a pump or other means of exerting a positive pressure on said dispersion within said chamber.

In any of the aforementioned embodiments of the method for processing, it is preferred that said chamber is a tube-like chamber having at least one wall, wherein said volume for receiving a liquid and a plurality of magnetic microparticles is enclosed by said at least one wall, wherein said chamber further comprises an upper end which may, optionally, be closed by a cap or seal. In a preferred embodiment of such tube-like chamber, a cross-section of said chamber is circular, oval, or otherwise round-shaped.

In a further preferred embodiment of said tube-like chamber, it has a longitudinal axis, wherein said volume for receiving a liquid and a plurality of magnetic microparticles extends along said longitudinal axis of said chamber, wherein said chamber further comprises a lower end configured to be reversibly opened and closed by a valve, said lower end acting as an inlet for liquid into said volume, or acting as an inlet and outlet for liquid into and from said volume; wherein said chamber further has an upper region located below and adjacent to said upper end formed by an upper part of said at least one wall, and wherein said upper region of said chamber comprises a permanent opening located in said at least one wall. It is further preferred that at said lower end of said chamber, there is located a bottom of said chamber which is the bottom to which said permanent magnet will sink, and on which said permanent magnet may reside on if an external user-definable electromagnetic field has been switched off.

In any of the foregoing embodiments of the method for processing, it is preferred that said volume of said chamber has a shape of a truncated cone, said truncated cone having a narrower end and a wider end, said chamber comprising a lower end and an upper end, said lower end being configured to be reversibly opened and closed by a valve, said lower end acting as an inlet for liquid into said volume, or acting as an inlet and outlet for liquid into and from said volume, said chamber further comprising an upper end which may be, optionally, closed by a cap or seal, and therein said narrower end of said truncated cone is located at said lower end of said chamber, and said wider end of said truncated cone is located at said upper end of said chamber.

In a preferred embodiment of the method according to the present invention, said first liquid is an aqueous liquid having an aqueous phase, and said second liquid, if provided in step g), is a non-aqueous liquid, having a non-aqueous phase, preferably an oily phase.

The method for processing magnetic microparticles in accordance with the present invention allows for an easy preparation of a dispersion of magnetic microparticles in a liquid and the exposure of magnetic microparticles to such liquid. It further allows and facilitates the preparation and exposure of magnetic microparticles to a series of different liquids, one after the other, during which process said magnetic microparticles may become dispersed in different liquids, one at a time. For example, if a first liquid is an aqueous liquid having an aqueous phase, the resultant dispersion of magnetic microparticles therein will be an aqueous dispersion. Likewise, if the second liquid is a non-aqueous liquid having a non-aqueous phase, such as an oily phase, the resultant dispersion will be a non-aqueous dispersion.

The term "microparticle", as used herein, is meant to refer to a particle the average dimensions of which are in the micrometer range. In one embodiment, the microparticles in accordance with the present invention have an average size or average dimension or average diameter of approximately 1 µm - 200 µm, preferably, 5 µm - 150 µm, more preferably, 10 µm - 100 µm. In one embodiment, the microparticles in accordance with the present invention are spherical or oval or ellipsoidal, preferably, spherical, and the abovementioned dimensions refer to the average diameter of such spherical, oval, or ellipsoidal microparticle. In one embodiment, the microparticles have a shape of a (spherical) droplet. In another embodiment, a microparticle in accordance with the present invention is a spherical body or quasi-spherical body, i. e. having the shape of a sphere (or nearly approaching it), such sphere having an average diameter of the aforementioned dimensions.

In principle, any microparticles may be processable with the method for processing microparticles in accordance with the present invention. In a preferred embodiment, the microparticles to be processed in a method according to the present invention are herein also sometime referred to as "beads" or as "nanoreactor beads". This is mainly, because such beads may comprise a void volume that is suitable to take up reagents for performing a particular chemical or biochemical reaction. Because of such microparticles being also sometimes referred to as "beads" or as "nanoreactor beads", the chamber for processing microparticles in accordance with the present invention is also sometimes referred to as a "chamber for processing beads" or as a "bead processing chamber" or as a "BPC".

In order for microparticles (or beads or nanoreactor beads) to be processable in accordance with the present invention, the only prerequisite is that such microparticles (or beads or nanoreactor beads) need to be magnetic. Such magnetic quality may for example be achieved by the fact that said microparticles contain smaller magnetic particles which are small enough such that they can be incorporated into said microparticles.

Suitable microparticles to be used in a method for processing in accordance with the present invention are for example disclosed in International patent application No. PCT/EP2022/080978, filed on November 7, 2022 by the present applicant, or International patent application No. PCT/EP2020/086171, filed on December 15, 2020, also by the present applicant.

The term "magnetic", when used herein, in conjunction with particles, is meant to refer to "magnetic particles" that show a magnetic behavior and that can be incorporated into the respective microparticles to be processed by the method according to the present invention. The dimensions of such "magnetic particles" depend very much on the dimensions of the respective "microparticles" into which they are to be incorporated. For example, if the microparticles to be processed in accordance with the method for processing according to the present invention, have an average size or dimension or diameter of approximately 1 µm to 200 µm, or 5 µm to 150 µm, or 10 µm to 100 µm, then the corresponding magnetic particles that are to be incorporated into said microparticles need to be smaller than such microparticles. In one embodiment, said "magnetic particles, as used herein, preferably, have a size and average diameter or average long extension in one dimension, in the range of from 50 nm to 10 µm, preferably, 100 nm to 5 µm, more preferably 1 µm to 5 µm, even more preferably 1 µm to 3 µm. When, in accordance with the present invention, magnetic particles are used to afford magnetic character to the microparticles to be processed, such "magnetic particles" are ferromagnetic particles in one embodiment. In another embodiment, such magnetic particles are paramagnetic particles. In yet another embodiment, such magnetic particles are ferrimagnetic particles. In yet another embodiment, such magnetic particles are superparamagnetic particles. In a preferred embodiment, the magnetic particles to be incorporated in said microparticles are ferromagnetic or paramagnetic particles. The term "magnetic particles", as used herein, is meant to exclude diamagnetic particles. In one embodiment, magnetic particles, as used herein, preferably, have a size and average diameter or an average long extension in one dimension, in the range of from 50 nm to 10 µm, preferably 100 nm to 5 µm, more preferably 1 µm to 5 µm, even more preferably 1 µm to 3 µm.

The term "dispersion of microparticles" relates to a mixture of microparticles within a liquid phase. Such term is sometimes herein also used synonymously with "suspension of microparticles". The term "suspension of microparticles", as used herein, refers to a dispersion, wherein small solid or semisolid particles, i.e. microparticles, are distributed in a liquid phase. The term "dispersion" as used herein is meant to refer to a heterogeneous mixture wherein, generally speaking, two different phases can be discerned.

According to another aspect, the invention also relates to a chamber for processing magnetic microparticles, such chamber being configured to be used in a method for processing microparticles in accordance with the present invention as described herein. In accordance with the present invention, such chamber for processing magnetic microparticles has a volume for receiving a liquid and a plurality of magnetic microparticles therein, a longitudinal axis and at least one wall. Said volume for receiving a liquid and a plurality of magnetic microparticles therein extends along said longitudinal axis of said chamber and is enclosed by said at least one wall. Furthermore, said chamber comprises an upper end closed or closable by a cap or seal, and a lower end configured to be reversibly opened and closed by a valve. The lower end of said chamber acts as an inlet for liquid into said volume of said chamber, or acts as an inlet and outlet for liquid into and from said volume of said chamber. Furthermore, the chamber for processing has an upper region located below and adjacent to said upper end, which upper region is formed by an upper part of said at least one wall, and wherein said upper region of said chamber comprises a permanent opening located in said at least one wall. Additionally, in accordance with the present invention, the chamber for processing magnetic microparticles further comprises a freely movable permanent magnet that is situated within said volume of said chamber. Although such permanent magnet is freely moveable, it is typically permanently situated within said volume and is not removed therefrom. Accordingly, said freely moveable permanent magnet situated within said volume of said chamber is an integral part of such chamber.

In a preferred embodiment, said chamber is a tube-like chamber and has a shape of a truncated cone. Such truncated cone has a narrower end and, opposite thereto, a wider end. The narrower end of said truncated cone is located at said lower end of said chamber, and the wider end of said truncated cone is located at said upper end of said chamber.

The terms "narrower end" and "wider end", or "narrow end" and "wide end", as used herein in this context of a truncated cone, are meant to designate, that the two respective ends differ in their width or cross-section, with the narrower (or narrow) end having a smaller width or cross-section than the wider (or wide) end, respectively.

The permanent opening that is located in the upper region of said chamber is configured to act as an inlet of gas, in particular air, or as an outlet of gas or liquid. Said permanent opening either is a an opening without a closure, allowing for free access and exit, of matter, to and from said volume of said chamber, or it is an opening comprising a filter. Such filter is preferably configured to withhold particles > 100 µm, or is configured to be self-sealing upon contact with a liquid.

Whilst the chamber for processing microparticles, as defined herein, is meant to be used in conjunction with microparticles, namely in a method for processing microparticles, also as defined herein, it should be noted that a chamber for processing microparticles, as defined herein, does not necessarily comprise microparticles and can also be used for purposes other than processing microparticles. As an example, a chamber for processing microparticles, as defined herein, may also be used for processing of a biological sample, especially for lysis of a biological sample. In such a case, a chamber for processing microparticles, as defined herein, comprises ceramic particles which are intended to facilitate a process of mechanical lysis of a biological sample. Structure-wise, such chamber for processing microparticles that is to be used for the purpose of processing, e.g. lysing a biological sample, is as defined herein, except for that it comprises ceramic particles.

The terms "ceramic particles", or "ceramic microparticles" or "ceramic beads", as used herein, are used interchangeably and refer to solid particles used to mechanically disrupt, lyse and homogenize biological samples. Such beads can be made of ceramics, silicon carbide, glass, zirconium silicate, zirconium oxide, stainless steel, garnet and other materials. When they are being used in a chamber for processing, they are typically moved violently within such chamber, leading to a destruction of a biological sample that is also located in the chamber. An example of such ceramic particles are particles of zirconium oxide. Typically, such ceramic particles are not magnetic, but they can be and are moved within a chamber of processing in accordance with the present invention, due to the movement of the freely movable permanent magnet located therein which leads to a violent and chaotic mixing and movement of any liquid located in the chamber and any particles therein, including also such ceramic particles. Effectively, thereby a milling process is performed which, when performed in the presence of a biological sample, e.g. blood, leads to a comminution, disruption and/or lysis of solid or membraneous components within such biological sample, such as biological cells. In accordance with embodiments of the invention, ceramic particles are typically used on their own in any particular chamber of a cartridge, i.e. without any other microparticles or components being present, the structural integrity of which is to be preserved; but the ceramic particles may still be and are used together with an appropriate liquid medium, such as a lysis buffer, and other (dissolved or soluble) components. Typically, the ceramic particles are not used in the presence of other particles, such as magnetic microparticles, as described herein, the structural integrity of which is to be preserved, because there is always the risk of a destruction of these other particles, e.g. magnetic microparticles by the harsh and violent movement of the ceramic particles.

A "biological sample", as used herein, is meant to refer to any sample obtained from the body of an organism which may or may not have been further processed, e.g. to make analyte(s) of interest accessible or amenable to further analysis. Such sample may be a liquid sample, such as a body fluid or components thereof, or a biological tissue or components thereof. Preferably such "sample" is selected from liquids, such as blood, plasma, serum, urine, sweat, tears, sputum, lymph, semen, ascites, amniotic fluid, bile, breast milk, synovial fluid, peritoneal fluid, pericardial fluid, cerebrospinal fluid, mucus, chyle, or from "solids", such as tissues, tissue parts, biological cells, cell cultures, or swabs, smears or wipes comprising biological cells and/or body fluid(s).

The chamber for performing a method for processing, in accordance with the embodiments described herein, is suitable performing a method for processing microparticles in accordance with the present invention. For example, it may also be part of a liquid handling and processing tool (=cartridge) as described herein. As such, however, a chamber for processing is a standalone-entity that can be used on its own. In typical embodiments of such chamber for processing, it should be used in conjunction with an external magnet located in vicinity thereto. Such external magnet does not form part of the chamber for processing. The combination of a chamber for processing in accordance with the present invention and an external magnet is a different entity, and such combination of a chamber for processing and an external magnet forms another aspect of the present invention. Such specific aspect is herein also referred to as a device for performing a method for processing microparticles according to the present invention.

Accordingly, in a further aspect, the present invention therefore relates to a device for performing the method for processing microparticles, in accordance with the present invention, wherein such device comprises a chamber for processing magnetic microparticles as described herein, and particularly as described in the aforementioned embodiments. Furthermore, such device comprises an external magnet and an actuator. In such device, the external magnet is located in vicinity to the chamber for processing magnetic microparticles, such that it exerts a magnetic force on said freely movable permanent magnet situated within the volume of said chamber, and such that said freely movable permanent magnet is held at a defined fixed position within said volume. The external magnet may be an electromagnet or a permanent magnet. A positioning of the external magnet in relation to said chamber is achieved by said actuator. Moreover, if the external magnet is an electromagnet, the device further comprise electrical circuitry and means to change position, polarity, frequency and/or strengths of said electromagnetic field. In one embodiment, said external magnet is an electromagnet, having a C-shaped core around which in a central portion thereof, a coil is wound. Such C-shaped core the shape of a pair of bull's horns a right horn and a left horn, the ends of which may face one another. In one embodiment, it is preferred that such C-shaped core is located in vicinity to said chamber for processing magnetic microparticles such that the chamber for processing magnetic microparticles is located between the aforementioned left horn and right horn of said C-shaped core. It is further preferred that said C-shaped core is rotated around a longitudinal axis of said coil wound around said central portion of said core. Such rotational movement translates into a selective positioning of the freely movable permanent magnet situated within said volume of said chamber.

In accordance with the present invention, a chamber for processing magnetic microparticles, as described herein, together with an external magnet, located in its vicinity, may form part of a further entity, herein also sometimes referred to as "cartridge" or "bead cartridge" or "liquid handling and processing tool for establishing a fluidic connection to or from a chamber and/or for effecting a flow of liquid to or from a chamber" or, more abbreviated, "liquid handling and processing tool". Such "cartridge" or "liquid handling and processing tool" is also described herein, in the present application.

In a further aspect, the present invention also relates to a chamber for incubating and detecting microparticles, in particular magnetic microparticles. Such chamber may come into play after a dispersion of microparticles has been prepared using a chamber and method for processing microparticles in accordance with the present invention.

For example, according to this aspect, the present invention relates to a chamber for performing and detecting a chemical/biochemical reaction using said microparticles. For example, such chemical/biochemical reaction may be an amplification reaction using said microparticles.

In accordance with the present invention, the chamber for incubating and detecting microparticles is a bipartite chamber and comprises:
- a first compartment having a first volume, said first compartment being configured for a process of concentrating microparticles within said first volume in a suspension of said microparticles in a liquid surrounding said microparticles, said process of concentrating within said first volume making use of a density difference between said microparticles and said liquid surrounding said microparticles; wherein said first compartment has an inlet opening and an outlet opening allowing the in- and outflow of a liquid or suspension into and out of said first volume, respectively.
- a second compartment having a second volume, said second compartment being configured for accommodating said concentrated microparticles within said second volume in a dense packing arrangement, said second compartment being configured for thermal incubation and detection of said microparticles arranged in a dense packing arrangement; said second compartment having an inlet opening and an outlet opening allowing the in- and outflow of a liquid or suspension into and out of said second volume, respectively, wherein said inlet opening and said outlet opening have a reversibly closing inlet valve and outlet valve, respectively, allowing for the reversible closing of said inlet opening and outlet opening, respectively, and thus for sealing of said second volume if both valves are closed;
wherein said first and said second compartment are fluidically connected with each other through said inlet opening, allowing for the flow of a suspension of concentrated microparticles from the first volume into the second volume if said inlet valve is open.

The term "fluidically connected" as used herein in the context of connecting two compartments, is meant to refer to a connection that allows the flow of liquid between two entities for example two compartments, that are thus connected, without any leakage. Such term "fluidically connected" may also be used synonymously with "connected in a leak-free manner".

In one embodiment of the chamber for incubating and detecting, said first compartment is configured for a process of concentrating microparticles within said first volume and is either a riser pipe or a down pipe, wherein each of said riser pipe and said down pipe has an upper end and a lower end, wherein, if said first compartment is a riser pipe, said riser pipe is fluidically connected to said inlet opening of said second compartment at said upper end of said riser pipe via said inlet valve of said second compartment and said outlet opening of said first compartment; and wherein, if said first compartment is a down pipe, said down pipe is fluidically connected to said inlet opening of said second compartment at said lower end of said down pipe via said inlet valve of said second compartment and said outlet opening of said first compartment.

Furthermore, in one embodiment of the chamber for incubating and detecting microparticles, said second compartment comprises a frame encompassing said second volume, said frame having side walls, an upper wall and a lower wall located opposite to said upper wall, said lower wall preferably being parallel to said upper wall; said second volume being enclosed by said side walls, said upper and said lower wall; wherein one of said upper wall and said lower wall, preferably said upper wall, is a transparent wall configured to be interrogated by an optical sensor. Moreover, the other of said upper wall and said lower wall, preferably said lower wall, is a wall having low heat conduction resistivity and is configured to be contacted by a temperature regulating device. In a preferred embodiment of such chamber, a distance between said upper wall and said lower wall is in the range of from 10 µm to 500 µm, more preferably, in the range of from 20 µm to 300 µm, more preferably, in the range of from 50 µm to 250 µm, more preferably 50 µm to 200 µm, and even more preferably 100 µm to 200 µm.

It should be noted that the aforementioned optical sensor as well as the temperature regulating device do not form part of the chamber for incubating and detecting microparticles.

The term "optical sensor", as used herein, is meant to refer to a device converting electromagnetic radiation, or a change thereof, into an electronic signal. Typically, the electromagnetic radiation may be in a range from infrared to ultraviolet wavelengths. Such an "optical sensor" may comprise an optical detector and additionally, a light source configured to be used as an excitation light source which can be used to irradiate a sample with. The term "configured to be interrogated by an optical sensor", when used in the context of a transparent wall, is meant to refer to such transparent wall being configured to be irradiated by electromagnetic radiation from an excitation light source that forms part of said optical sensor. The transparent wall is transmissive for a broad range of wavelengths from infrared wavelengths to ultraviolet wavelengths and will therefore also be transmissive for any such radiation that may be emitted from a sample located underneath that transparent wall, when such sample has been excited by excitation light from the excitation light source. Such emission light or emitted light will then be subsequently detected by a detector forming part of said optical sensor.

It should also be noted that in the embodiments of said chamber for incubating and detecting that encompass a frame, one of said upper wall and said lower wall is a transparent wall configured to be interrogated by an optical sensor, whereas the respective other of said upper wall and said lower wall does not have to be transparent but is a wall having low heat conduction resistivity and is configured to be contacted by a temperature regulating device. Which one of the upper and lower walls is transparent or has a low heat conduction resistivity, depends on the instrument in which said chamber for incubating and detecting is to be used. Whilst the aforementioned minimum requirement concerning the qualities of the respective walls (=one wall being transparent, the other wall having a low heat conduction resistivity) always applies to all embodiments of the incubating and detecting chamber comprising a frame, it should be noted that in some embodiments thereof, both walls may be transparent. In one embodiment of the chamber for incubating and detecting microparticles, said inlet opening and said outlet opening are formed by or comprise an elastomeric material, and said inlet valve and said outlet valve comprise first closing means and second closing means, respectively, configured to be independently pressed against said inlet opening and said outlet opening, respectively, and to thereby squeeze said elastomeric material and to thereby reversibly close said inlet opening and said outlet opening in a pressure tight manner, allowing for a build-up of pressure in said second compartment, wherein, preferably, said first closing means and second closing means are independently selected from rods, bars, sticks, strips, pillars, clamps, clips and clasps. For example, said second volume of said second compartment may be become filled with a dispersion of microparticles to such an extent that there occurs a build-up of pressure in said second compartment, for example by the action of a pump, and such build-up of pressure may then be maintained by closing said inlet opening and said outlet opening in a pressure tight manner.

In a further preferred embodiment which may be combined with any of the aforementioned embodiments of the chamber for incubating and detecting, said upper and said lower wall of said second volume are held apart by at least one spacer pillar situated within said second volume and being in contact with said upper and lower wall. Thereby a collapse of said upper and lower wall is prevented. Preferably, said upper wall and said lower wall are held apart by two, three, four, five or more spacer pillars situated within said second volume which spacer pillars are evenly distributed in said second volume and which are in contact with said upper and lower wall, thereby preventing said upper and lower wall from collapsing.

In yet a further preferred embodiment which may also be combined with any of the aforementioned embodiments, said outlet opening of said second volume is connected to a conduit that is permanently open and that serves as a vent. Preferably, said conduit comprises a filter configured to withhold particles > 100 µm, and/or being configured to be self-sealing upon contact with liquid.

In accordance with one preferred embodiment of the chamber for incubating and detecting microparticles according to the present invention, or the chamber for processing magnetic microparticles according to the present invention, said chamber may further comprise a plurality of magnetic microparticles which are preferably dispersed in a liquid. Such liquid may be an aqueous phase or a non-aqueous phase when said chamber is a chamber for processing magnetic microparticles. Alternatively, when said chamber is a chamber for incubating and detecting microparticles, said liquid may be a non-aqueous phase which isolates microparticles from each other.

A further aspect of the present invention relates to a process for accommodating microparticles in a dense packing arrangement in a volume of a chamber for incubating and detecting microparticles, as defined herein. According to this aspect, the process comprises:
a) providing, in any order, a chamber for incubating and detecting microparticles according to the present invention, as defined herein, and a plurality of microparticles dispersed in a liquid, wherein preferably, said liquid is a non-aqueous liquid, more preferably, having an oil phase;
b) introducing said plurality of microparticles dispersed in said liquid into said first compartment of said chamber for incubating and detecting microparticles, and concentrating said microparticles in said first volume of said first compartment making use of a density difference between said microparticles and said liquid surrounding said microparticles;
c) accommodating said plurality of microparticles in a dense packing arrangement in said second volume of said second compartment of said chamber for incubating and detecting microparticles, by ejecting said concentrated microparticles from said first volume of said first compartment and introducing them into said second volume of said second compartment through said inlet opening; closing said outlet opening when a first portion of said plurality of microparticles have reached said second volume or said outlet opening, whilst continuing to eject said plurality of microparticles from said first volume of said first compartment into said second volume, thereby increasing or building up a pressure within said second compartment, and closing said inlet opening when all of said plurality of microparticles have been introduced into said second compartment.

In one embodiment of this process, for step b), a density of each of said microparticles is chosen such that it is different from a density of said liquid in which said microparticles are dispersed, and step b) involves allowing said microparticles to accumulate at an upper end of said first volume if said density of each of said microparticles is smaller than the density of said liquid in which said microparticles are dispersed. Alternatively, in such embodiment, step b) involves allowing said microparticles to accumulate at a lower end of said first volume, if said density of each of said microparticles is larger than the density of said liquid in which said microparticles are dispersed.

As used herein, the term "density", in the context of microparticles refers to the density of each individual microparticle and not to the density of the plurality of microparticles within a dispersion or liquid or sample. Only when the density of each of said microparticles is chosen such that it is different from a density of said liquid in which the microparticles are dispersed, then it will be possible to make use of a density difference between the microparticles on the one hand and the liquid surrounding said microparticles on the other hand, so as to concentrate said microparticles in said first volume of said first compartment.

In a preferred embodiment, said dense packing arrangement of step c) of the process for accommodating microparticles in a dense packing arrangement is a monolayer of microparticles, wherein said microparticles are closely packed within said monolayer.

In one embodiment, said chamber for incubating and detecting microparticles is a chamber as defined herein, and comprises a frame encompassing said second volume, said frame having side walls, an upper wall and a lower wall located opposite to said upper wall, said upper wall being parallel to each other; said second volume being enclosed by said side walls, said upper and said lower wall; wherein one of said upper wall and said lower wall is a transparent wall configured to be interrogated by an optical sensor; and wherein the other of said upper and lower wall is a wall having a low heat conduction resistivity and is configured to be contacted by a temperature regulating device; wherein a number of microparticles dispersed in said liquid is chosen such that it does not exceed the maximum number of microparticles that can be arranged in a monolayer between said upper and said lower wall in said second compartment which monolayer has the closest possible packing; or a number of microparticles dispersed in said liquid is chosen such that the microparticles, when arranged in a monolayer in the closest possible packing between said upper and said lower wall in said second compartment, cover an area that is equal to or smaller than an area provided by said upper wall or said lower wall. In this context, it should be noted however, that if said chamber for incubating and detecting is used as part of a liquid handling and processing tool (= i.e. as part of a "cartridge"), the total number of microparticles that are being processed in such liquid handling and processing tool and that are dispersed in said liquid may exceed and be larger than the number of microparticles that become (ultimately) arranged in a monolayer between said upper and said lower wall of said frame of said chamber.

The terms "process" and "method", as used herein, are meant to be used synonymously, referring to a procedure or activity that is to be performed.

In yet a further aspect, the present invention relates to a liquid handling and processing tool for establishing a fluidic connection to or from a chamber and/or for effecting a flow of liquid to or from a chamber. Such liquid handling and processing tool is sometimes herein also referred to as a "cartridge" or "bead cartridge" and may for example comprise a chamber for processing magnetic microparticles as described herein, and/or a chamber for incubating and detecting microparticles, as described herein, and/or a pump for moving liquids or suspensions or dispersions between different chambers forming part of said liquid handling and processing tool, and/or additional chambers, such as storage chambers for reagents, aqueous liquids, non-aqueous liquids or waste.

A liquid handling and processing tool in accordance with the present invention comprises:
- a housing including a central space and a plurality of chambers for holding reagent(s) or receiving liquid(s), such chambers being arranged around said central space;
- a fluid displacement chamber having an upper and a lower end, said fluid displacement chamber encompassing a volume for receiving, handling and moving a liquid, said volume for receiving and handling a liquid having an upper part and an adjacent lower part, said upper part having a cylindrical shape, said adjacent lower part having a shape of a cone or truncated cone, said cone or truncated cone being positioned upside-down within said fluid displacement chamber such that a narrower part of said cone or truncated cone is located at said lower end of said fluid displacement chamber, and a wider part of said cone or truncated cone transitions into said upper part of said volume;
   said fluid displacement chamber further having a movable piston located in said upper part of said volume and snugly fitting therein, said piston being dimensioned such that it is movable within said upper part of said volume, but is not movable into or within said adjacent lower part of said volume;
   wherein said fluid displacement chamber is located in said central space of said housing, and said plurality of chambers are arranged around said fluid displacement chamber;
- a valve located at the lower end of said fluid displacement chamber and allowing to establish a single fluidic connection from said fluid displacement chamber to a selected chamber of the plurality of chambers.

The terms "narrower part" and "wider part", or "narrow part" and "wide part", as used herein in this context of a cone or truncated cone, are meant to designate, that the two respective parts differ in their width or cross-section, with the narrower (or narrow) part having a smaller width or cross-section than the wider (or wide) part, respectively.

Such liquid handling and processing tool may be connected to a device for exerting pressure to said fluid displacement chamber allowing said movable piston located in the upper part of the volume of said fluid displacement chamber to be moved up or down. Such pump may be operated by means of a pump actuator and can be used to exert positive pressure for moving a liquid into one direction, or negative pressure for moving liquid into an opposite direction. Depending on the direction of pressure (positive or negative), a liquid may be ejected from one chamber into another chamber or may be sucked from one chamber into another chamber.

In one embodiment, the housing of said liquid handling and processing tool further comprises at least one interface for fluidically connecting a separate chamber for processing microparticles, as described herein to said housing ("processing interface"); and/or said housing further comprises at least one interface for fluidically connecting a separate chamber for incubating and detecting microparticles, as defined herein, to said housing. In this embodiment, said valve located at the lower end of said fluid displacement chamber allows to establish a single fluidic connection from said fluid displacement chamber to either: a selected chamber of the plurality of chambers, or to said at least one interface for fluidically connecting said separate chamber for processing microparticles, as described herein, or to said at least one interface for fluidically connecting said separate a chamber for incubating and detecting microparticles, as described herein.

In a preferred embodiment, said valve located at the lower end of said fluid displacement chamber is configured to establish a series of single fluidic connections, namely one single fluidic connection at a given time, wherein, in said series of single fluidic connections, one single fluidic connection is established after another, wherein said one single fluidic connection is from said fluid displacement chamber to a selected chamber of the plurality of chambers or to one of said interfaces, wherein more preferably said valve is a rotary valve.

In a more preferred embodiment, the liquid handling and processing tool further comprises a chamber for processing microparticles according to the present invention as defined herein, wherein said chamber for processing microparticles is fluidically connected to said processing interface.

In another preferred embodiment, the liquid handling and processing tool further comprises a chamber for incubating and detecting microparticles, as defined herein, wherein said chamber for incubating and detecting microparticles is fluidically connected to said incubating interface.

In yet another preferred embodiment, the liquid handling and processing tool further comprises both a chamber for processing microparticles, as defined herein, and a chamber for incubating and detecting microparticles, as defined herein, wherein said chamber for processing microparticles is fluidically connected to said processing interface; and wherein said chamber for incubating and detecting microparticles is fluidically connected to said incubating interface.

In yet another even more preferred embodiment, the liquid handling and processing tool further comprises a plurality of magnetic microparticles; wherein, preferably, the magnetic microparticles are located either in said chamber for processing microparticles or in said chamber for incubating and detecting microparticles or, possibly, even in both.

In one embodiment of the liquid handling and processing tool, such tool further comprises an aqueous phase and, separate therefrom, a non-aqueous phase. These phases are typically located in different chambers.

As used herein, a "chamber for processing magnetic microparticles" is also sometimes referred to as a "processing chamber" or "bead processing chamber". Such chamber for processing magnetic microparticles is either a standalone-chamber and can be used on its own, or it forms part of a liquid handling and processing tool for establishing a fluidic connection or for effecting a flow of liquid to or from a chamber, as defined herein. Such "liquid handling and processing tool", is herein also sometimes referred to as a "cartridge" or "bead cartridge".

Likewise, a "chamber for incubating and detecting microparticles", as used herein, is also sometimes referred to as an "incubation chamber" or "detection chamber" or "amplification chamber" or "PCR chamber". The chamber for incubating and detecting microparticles may be a standalone-chamber or may be also part of a liquid handling and processing tool (or "cartridge").

Typically, in embodiments of the present invention, a liquid handling and processing tool for establishing a fluidic connection to or from a chamber and/or for effecting a flow of liquid to or from a chamber is a tool for the safe operation and performance of a variety of bioanalytical assays. A liquid handling and processing tool in accordance with the present invention is capable and suitable of conducting analysis of biological samples for various diagnostic and monitoring purposes. For that purpose, a liquid handling and processing tool in accordance with the present invention may comprise a variety of components for example, it may comprise an integrated pump component or module which is provided to move liquids between different other components or module. The pump can be operated by a pump actuator. Moreover, a liquid handling and processing tool may comprise a valve component, such as a rotary valve. Such valve component provides for a controlled liquid interphase between different chambers of the liquid handling and processing tool and the pump component. Again, here, also the different valves interphase with valve actuators. Moreover, a liquid handling and processing tool in accordance with the present invention may comprise an incubation and detection chamber (= "chamber for incubating and detecting microparticles") which is designed for concentrating microparticles and for arranging them in a monolayer formation. Moreover, such incubation and detection chamber is designed for temperature incubation and fluorescence detection/interrogation of the microparticles therein. Also this chamber for incubating and detecting microparticles is equipped with valves which provide for a closed operation. A liquid handling and processing tool in accordance with the present invention may also comprise one or more storage chambers for various liquids, such as buffers, but also liquids which are immiscible with aqueous solutions, such as non-aqueous liquids, e. g. oils. Likewise, there may also be one or more storage chambers for reagents within said liquid handling and processing tool, in which said storage chambers said reagents are provided in a dry state or being resuspended in aqueous buffers. Furthermore, in accordance with the present invention, a liquid handling and processing tool may contain one or more chambers for processing magnetic microparticles (= "bead processing chambers"). As described herein, such chamber for processing magnetic microparticles allows for the efficient and reproduceable preparation of dispersions of microparticles in aqueous or non-aqueous liquids or for an exchange of liquids in such dispersions. Altogether, in typical embodiments, a liquid handling and processing tool will contain all the reagents required to perform the respective test and provide compartments and/or chambers for performing dedicated processing and detection steps. In certain embodiments, the liquid handling and processing tool is also disposable. The process(es) performed using the liquid handling and processing tool is/are self-contained, in that at no time, a sample or the reagents will come into contact with the instrument that is used to process the cartridge. By way of explanation, a liquid handling and processing tool in accordance with the present invention is to be used in a device which provides for temperature controlling means as well as optical detection means.

A chamber for incubating and detecting microparticles, as used herein, allows for a concentration of microparticles within a first compartment having a first volume. The first compartment is configured for a process of concentrating microparticles within the first volume in a suspension of microparticles in a liquid surrounding said microparticles. The process of concentrating the microparticles within said first volume makes use of a density difference between the microparticles and the liquid surrounding them. For example, such liquid may be a non-aqueous, water-immiscible liquid which is chosen such that it has a density that is different in comparison to the density of each of the magnetic microparticles. In a preferred embodiment the density of the non-aqueous liquid phase is chosen such that it is larger than the density of each of the magnetic microparticles. Therefore, the lower density of each of the microparticles will result in a buoyance of the microparticles within the non-aqueous, water-immiscible liquid phase. Examples of a suitable non-aqueous, water-immiscible liquid phase are oils, in particular mineral oils, fluorocarbon (FC) oils, perfluorocarbon (PFC) oils, perfluoropolyether (PFPE) oils, and hydrofluoroether (HFE) oils. An example of a suitable hydrofluoroether oil is Novec 7500 ^{®}, commercially available for example from 3M Deutschland GmbH, Neuss, Germany. In some embodiments, the non-aqueous, water-immiscible liquid phase may be or is supplemented with additives such as an emulsifier, a surfactant, and/or a stabilizer etc.

It should be noted that in embodiments of the method for processing magnetic microparticles, the generation of a user-definable magnetic field in step c) can occur in various different ways. For example, one possibility of generating such user-definable magnetic field is to provide an external magnet, such as permanent magnet or an electromagnet which does not form part of the chamber for processing microparticles, and placing it in vicinity to said chamber for processing microparticles, such that such magnet exerts a magnetic force on the freely movable permanent magnet situated within the volume of said chamber. Another possibility of generating a user-definable magnetic field in step c) is to switch on an electromagnet that had already been previously placed in vicinity to the chamber. Again, such electromagnet does not form part of the chamber but is located externally thereto and in vicinity to said chamber such that external electromagnet exerts a magnetic force on the freely movable permanent magnet situated within the volume of said chamber, and such that the freely movable permanent magnet may be or is held at a defined fixed position within the volume of said chamber.

In preferred embodiments of the method for processing magnetic microparticles, it is envisaged that the freely movable permanent magnet that is situated within the volume of said chamber, is an integral part of such chamber. This means that such freely movable permanent magnet may move within the chamber due to a change of a magnetic force exerted by an external magnet, but does not move out of said chamber, for example is not removed therefrom at any time of the process. This is relevant insofar when in steps e^{∗}) or j) a physical separation of the magnetic microparticles from the permanent magnet occurs, it is more preferred that such physical separation occurs by removing the plurality of magnetic microparticles distributed and dispersed within the liquid (either the first liquid or the second liquid) from the volume of the chamber. Although theoretically possible it is not preferred that such physical separation occurs by removing the permanent magnet from the volume and the chamber and leaving the liquid (either the first liquid or the second liquid) in which the microparticles are distributed and dispersed, within the chamber. It is therefore preferred that removal of the plurality of magnetic microparticles distributed and dispersed within the liquid (either the first or the second liquid) from the volume occurs by removing/transferring the respective liquid in which the microparticles are distributed and dispersed, from the volume elsewhere. Such removal of liquid, including microparticles distributed and dispersed therein, may for example, be achieved by pumping, or otherwise transferring, such liquid out of the chamber. For example, if the chamber for processing magnetic microparticles is part of a liquid handling and processing tool, as described herein, in accordance with the present invention, such removal of said liquid from said chamber for processing microparticles occurs by action of a fluid displacement chamber forming part of the liquid handling and processing tool and having a movable piston located therein which is movable within the fluid displacement chamber by interaction with a plunger or tappet of a pump, such as of a syringe. Effectively, such fluid displacement chamber itself will therefore act as a pump by which transfer of a liquid may occur.

In principle, for any transfer of liquid from or into a chamber, a pump or syringe or any other means for exerting a positive or negative pressure on such liquid, may be employed, as long as such means is fluidically connected to the respective chamber from which or to which a liquid should be moved. Transfer may occur by any suitable transfer process, such as pumping, pipetting, sucking, ejecting, aspirating, or pushing.

In accordance with preferred embodiments of a chamber for processing magnetic microparticles, according to the present invention, such chamber has a volume for receiving a liquid and, when in use, optionally a plurality of magnetic microparticles therein; it has a longitudinal axis and at least one wall, wherein the volume for receiving a liquid and a plurality of magnetic microparticles therein extends along the longitudinal axis of the chamber and is enclosed by said at least one wall. It should be noted that in embodiments, wherein the chamber has only one wall that encloses said volume, typically, such chamber has a round-shaped (or oval), or circular cross-section. The volume for receiving a liquid is then enclosed by one wall at its sides, and by an upper end and a lower end at the top and bottom, respectively of said chamber. In other embodiments, however, there may also be more than one wall, i. e. several walls, that enclose said volume, in which case the cross-section of said chamber may be somewhat angular, for example triangular, rectangular, square, pentagonal, hexagonal, heptagonal, octagonal, nonagonal, decagonal, etc. The volume for receiving a liquid is then enclosed by said several walls at its sides, and by an upper end and a lower end at the top and bottom, respectively, of said chamber.

In a preferred embodiment, the chamber for processing magnetic microparticles is a tube-like chamber. The term "tube-like" as used herein, in this context, is meant to refer to a chamber which has shape of a tube. For example, it may have a cylindrical shape, or it may have a cone-like shape with different widths of its cross-sections at different ends. In a preferred embodiment, however, it is the volume of the chamber for processing magnetic microparticles which has a shape of a truncated cone, wherein said truncated cone has a narrower end and, opposite to said narrower end, a wider end wherein said lower end is configured to be reversibly opened and closed by valve (for example a valve that is part of a liquid handling and processing tool in which said chamber is incorporated). The lower end of said chamber acts as an inlet for liquid into the volume of said chamber, or it acts as an inlet and outlet for liquid into and from the volume of said chamber. Moreover, the chamber further comprises an upper end which may be, optionally, closed by a cap or seal. In the embodiment, wherein the volume of the chamber has the shape of a truncated cone, the narrower end of said truncated cone is located at the lower end of the chamber, and the wider end of the truncated cone is located at the upper end of the chamber.

It should also be noted that in the context of the chamber for incubating and detecting, as defined herein, sometimes reference is made to a transparent wall which is described as being "configured to be interrogated by an optical sensor". In this context it should be noted that such optical sensor is not part of the chamber for incubating and detecting, as defined herein, but is provided by a separate instrument allowing for optical interrogation of the chamber for incubating and detecting. Likewise, still in the context of the chamber for incubating and detecting, as defined herein, sometimes reference is made to a wall having low heat conduction resistivity and which is described as being "configured to be contacted by a temperature regulating device". In this context it should be noted that, again, such temperature regulating device is not part of the chamber for incubating and detecting, as defined herein, but is provided by a separate instrument allowing for heating and cooling of the chamber for incubating and detecting.

In the context of the chamber for incubating and detecting, as defined herein, sometimes reference is made to a "riser pipe". Such term, as used in this context, is meant to refer to a tube or pipe or conduit acting as first compartment of said chamber for incubating and detecting and allowing liquid or a suspension to be transported or transferred from a lower level to the second compartment of said chamber for incubating and detecting, which second compartment is located at an elevated level (in comparison to the first compartment) and with which said riser pipe (= first compartment) is fluidically connected.

Likewise, sometimes reference is made to a "down pipe". Such term, as used in this context, is meant to refer to a tube or pipe or conduit acting as first compartment of said chamber for incubating and detecting and allowing liquid or a suspension to be transported or transferred from a higher level to the second compartment of said chamber for incubating and detecting which second compartment is located at a lower level (in comparison to the first compartment) and with which said down pipe (= first compartment) is connected.

In accordance with embodiments of the present invention, there is also provided a liquid handling and processing tool for establishing a fluidic connection to or from a chamber and/or for effecting a flow of liquid to or from a chamber. Such liquid handling and processing tool is herein also sometimes referred to as a "cartridge" or "bead cartridge". The liquid handling and processing tool for establishing a fluidic connection to or from a chamber and/or for effecting a flow of liquid to or from a chamber, in accordance with the present invention, is a self-contained integrated cartridge which allows the performance of multi-step workflows involving magnetic microparticles, such as nanoreactor beads. By appropriately providing for a plurality of chambers within such cartridge, including storage chambers, one or several chambers for processing microparticles, as defined herein, and at least one chamber for incubating and detecting microparticles, also as defined herein, and by pre-filling the respective chambers with the necessary reagents and/or microparticles for performing the intended reaction(s), complex multi-step protocols and workflows can be performed without having to interfere once the workflow has been started, and without running the risk of introducing external sources of contaminations. This is because all the necessary reagents are already part of the cartridge and do not need to be added during the workflow anymore. All a user has to do is to initially load a sample and thereafter follow the desired protocol, once the cartridge has been introduced into an appropriate instrument allowing for heating and cooling, furthermore allowing for an interaction with means to operate the fluid displacement chamber of the cartridge, and, furthermore allowing for optical interrogation of the chamber for incubating and detecting. Performance of the desired protocol may be controlled by a computer and appropriate operating software. Hence, a liquid handling and processing tool, as defined herein, is completely self-contained and does not require any non-automated user interaction which might potentially introduce contaminants, other than the initial introduction of sample(s) into the liquid handling and processing tool.

It therefore allows the performance of completely hands-off "sample-to-answer"-workflows.

In the following, reference is made to the **figures,** wherein:

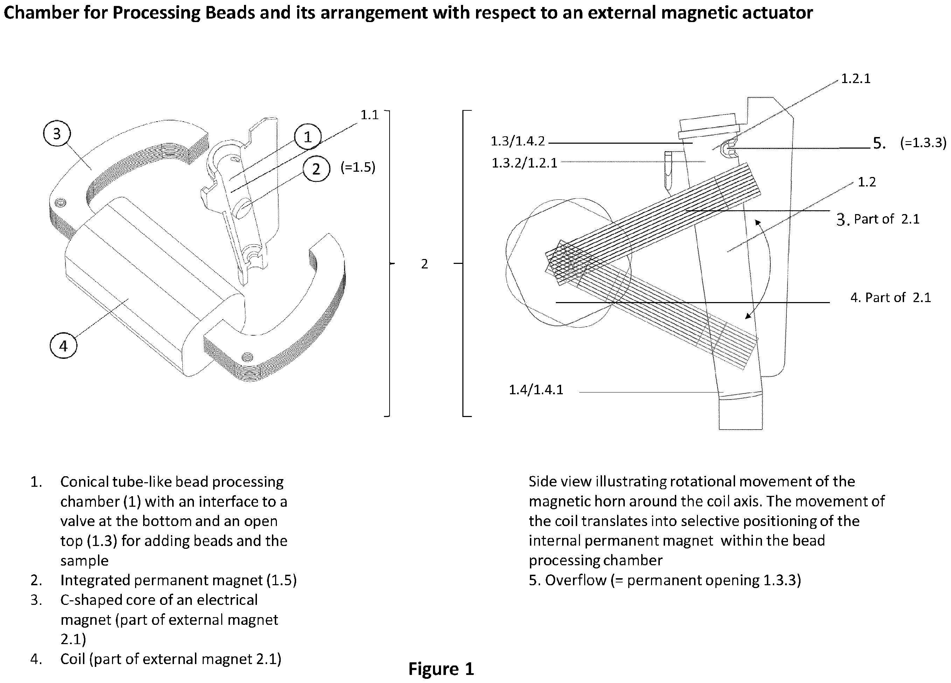

**Figure 1** shows an embodiment of a chamber for processing magnetic particles (="bead processing chamber") and its arrangement with respect to an external magnet. It should be noted that such external magnet does not form part of the chamber for processing in accordance with the present invention, for example it does not form part of the chamber for processing according to any of claims 15 - 17, but such external magnet does form part of a device for performing a method for processing magnetic microparticles in accordance with the present invention, in particular it does form part of a device according to claim 18.

In the left part of the figure, a perspective view is shown of a tube-like bead processing chamber with an interface to a valve at the bottom and an upper end which is open but can be closed by a cap or seal. Such chamber for processing may have a cylindrical or conical shape. In a preferred embodiment, it is the internal volume of said chamber, i.e. the volume for receiving a liquid and a plurality of microparticles, which has a cylindrical or conical shape. When the upper end of the processing chamber is open, microparticles and a sample can be added. Also on the left hand side of the figure, there is shown a freely moveable permanent magnet located in the chamber, as well as an electromagnet in the form of a C-shaped core, having in its central portion a coil would around it, such electromagnet being located in the vicinity of said chamber for processing magnetic microparticles, such that it exerts a magnetic force on said freely movable permanent magnet situated within said volume of said chamber, and such that said freely movable permanent magnet is held at a defined fixed position within said volume. On the right hand side of figure 1, there is shown a side view of the same chamber which side view illustrates a rotational movement of the electromagnet around the coil axis by a curly arrow which indicates two possible positions of the C-shaped core of the electromagnet. The movement of the coil and C-shaped core translates into a selective positioning of the internally located permanent magnet within the chamber for processing. Also shown on the right hand side is a permanent opening located in an upper region of the chamber. Such permanent opening may act as an overflow and/or vent and allows for a unidirectional flow in particular when the chamber is incorporated into a liquid handling and processing tool ("cartridge") and when it is necessary within a particular liquid handling process to interrogate the microparticles ("beads") with different liquids without allowing any of such liquids or traces of such liquids to leave the chamber for processing to any other compartment or functional elements such a valves, pumps and others, that may come in contact with reagents or samples other than the microparticles in the given chamber for processing. This is to avoid any sources of contamination within the cartridge.

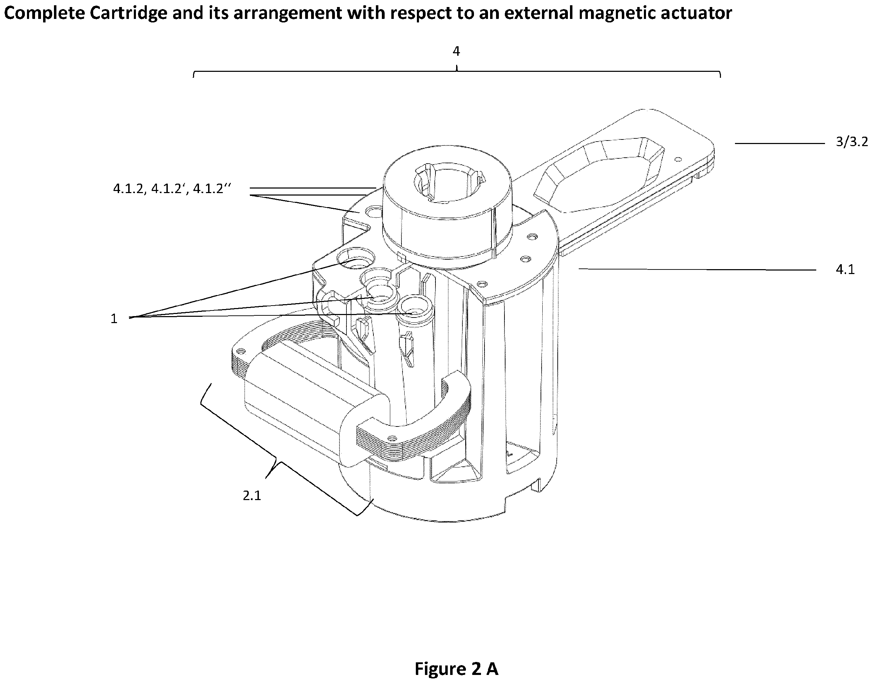

**Figure 2A** shows an example of a possible arrangement of an embodiment of a chamber for processing magnetic microparticles when integrated within an embodiment of a liquid handling and processing tool (="Cartridge"). More specifically, in Figure 2A, there are shown three such chambers for processing magnetic microparticles which are integrated and located within a liquid handling and processing tool (= "cartridge"). The housing of the cartridge shown is cut partially open to reveal the arrangement of the chambers for processing within the tool. At the opposite side of the cartridge, there is also shown a chamber for incubating and detecting microparticles, more specifically a second compartment thereof protruding from said cartridge.

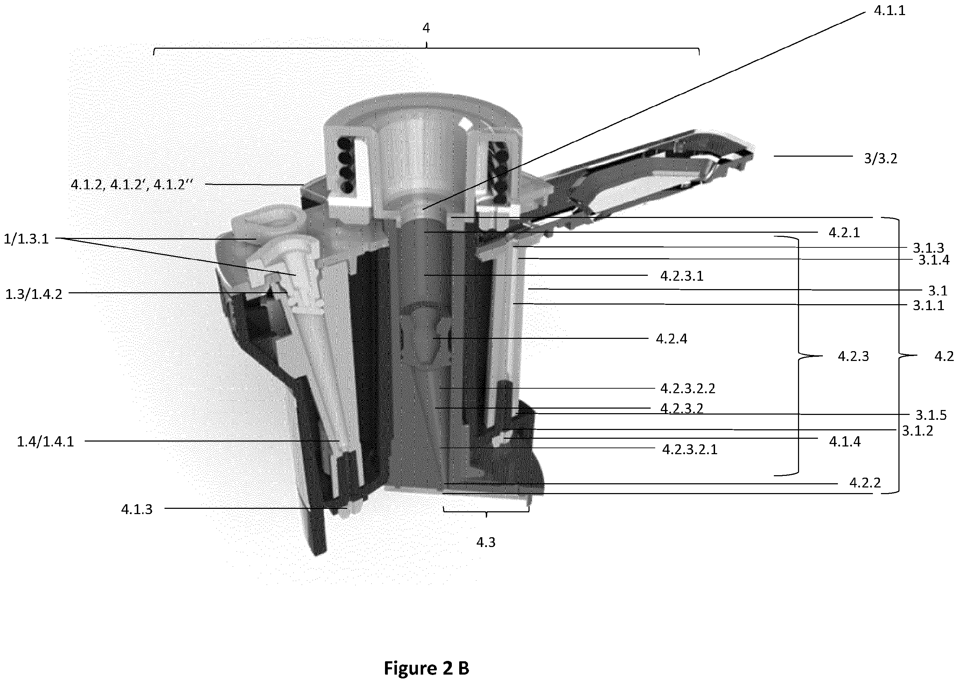

**Figure 2B** shows an example of a partially cut open cartridge showing a cross-section of fluid displacement chamber including a movable piston located in an upper part of the volume of the fluid displacement chamber. Also shown is a cross-section of a chamber for processing including a cap or seal or stopper closing the upper end of said chamber. Furthermore shown is a partically cut open chamber for incubating and detecting microparticles, including a first compartment and a second compartment.

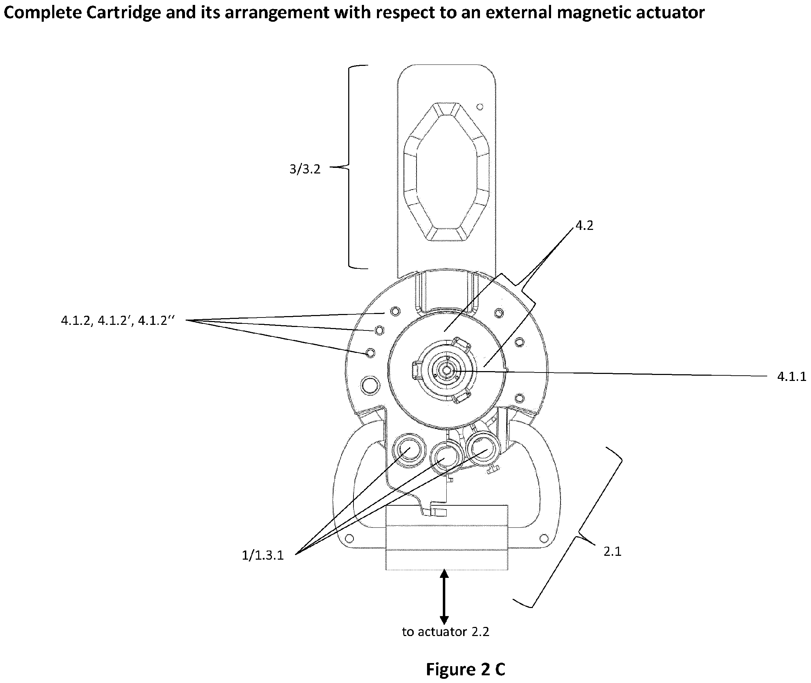

**Figure 2C** shows a top view of the same cartridge embodiment, illustrating the positioning of the external magnet with respect to the three chambers for processing.

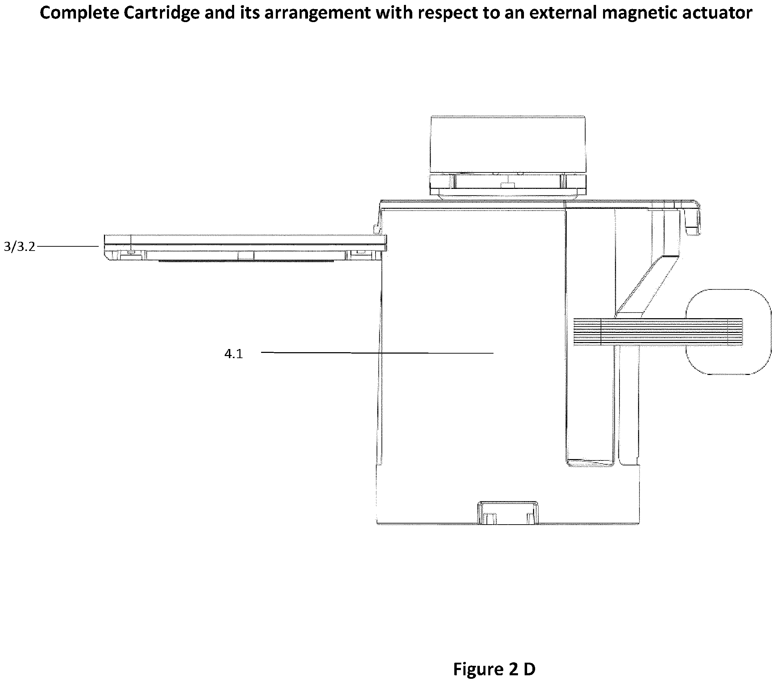

**Figure 2D** shows a side view of the same embodiment of the cartridge, again, showing one possible positioning of the external magnet in relation to the cartridge.

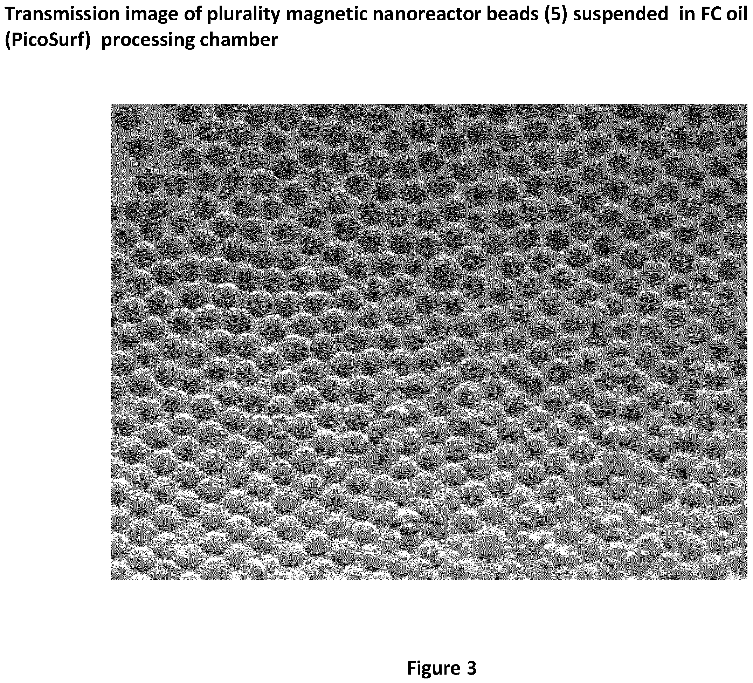

**Figure 3** shows a transmission image of a plurality of magnetic microparticles (5) (="magnetic nanoreactor beads") that have been suspended in fluorocarbon (FC) oil (PicoSurf) by performing a method for processing microparticles in accordance with the present invention using a chamber for processing (="processing chamber") as described herein and using the interplay of a freely moveable permanent magnet located within the processing chamber and an external magnet exerting a magnetic force on such internally located permanent magnet. The magnetic nanoreactor beads are easily recognizedas round "blobs". Smaller droplets also seen in the image are micro-emulsion droplets formed from excess liquid not taken up by the magnetic nanoreactor beads.

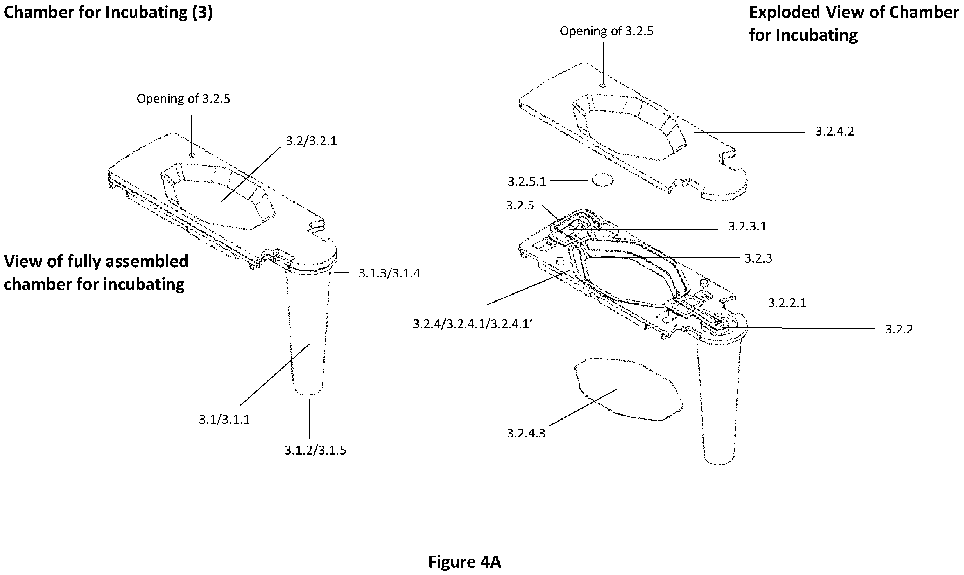

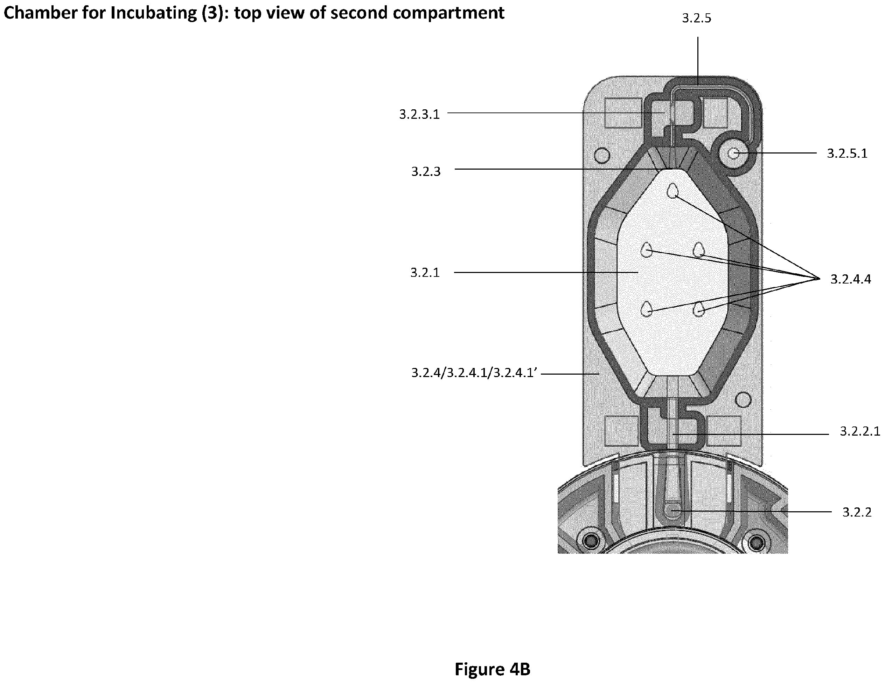

**Figure 4A** shows different views of an embodiment of a chamber for incubating and detecting microparticles, with the left-hand side showing a perspective view of a fully assembled chamber for incubating and detecting. Such chamber comprises a first compartment and a second compartment. The first compartment is configured for a process of concentrating microparticles within a first volume of said first compartment. In this particular example, such first compartment is configured as a riser pipe. The second compartment having a second volume, is configured for accommodating the concentrated microparticles therein.

The right-hand side of figure 4A shows an exploded view of an embodiment of a chamber for incubating and detecting microparticles. Also shown in this part of the figure is a frame which encompasses the second volume, and which has side walls, an upper wall and a lower wall located opposite to said upper wall, wherein the upper wall in this case is the transparent wall. The lower wall is a wall having a low heat conduction resistivity. Also shown are reversibly closing inlet and outlet valves, respectively, as well as a conduit that is connected to the outlet opening/valve of the second volume which conduit ends in a vent, wherein, however, underneath the vent opening, there is an aerosol tight filter.

**Figure 4B** shows a top view of a second compartment of a chamber for incubating and detecting microparticles, showing, inter alia, the second volume thereof, inlet and outlet openings of the second compartment, including their respective reversibly closing valves, a frame of said second compartment and several spacer pillars situated within said second volume and evenly distributed therein which prevent upper and lower walls of the second compartment from collapsing by being in contact therewith.

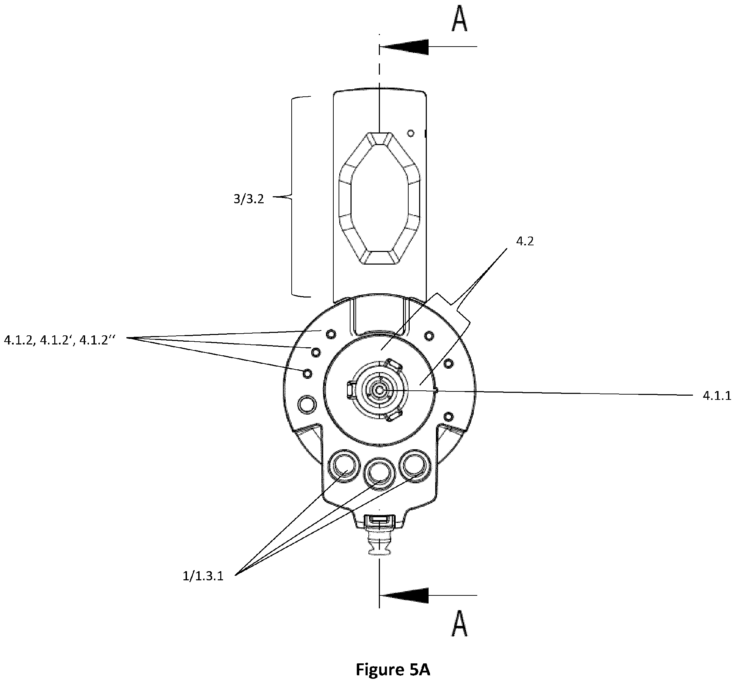

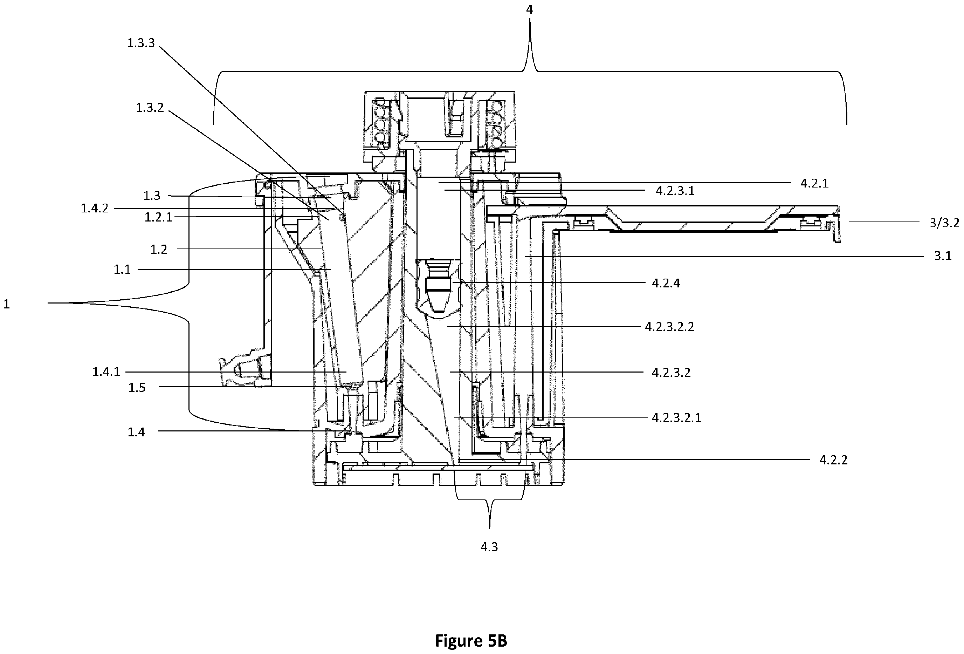

**Figure 5** shows an embodiment of a liquid handling and processing tool (="cartridge") which includes a chamber for incubating and detecting. Shown in **Figure 5A** is a top view, and shown in **Figure 5B** is a cross-section through the tool along line A-A of Figure 5A.

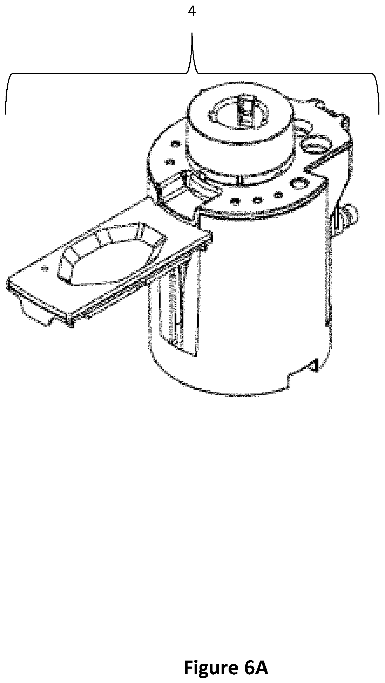

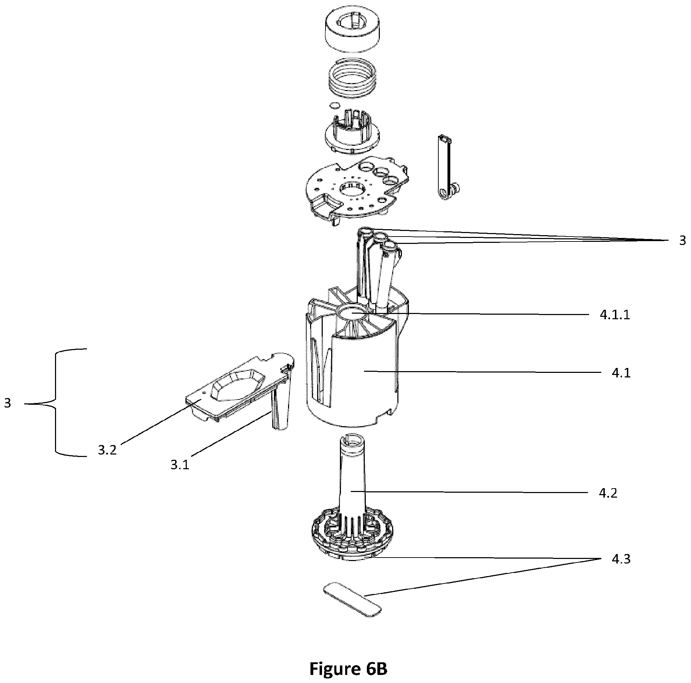

**Figure 6** shows an assembled **(****Figure 6A****)** and an exploded view (**Figure 6B**) of an embodiment of a liquid handling and processing tool in accordance with the present invention including three chambers for processing and a chamber for incubating and detecting.

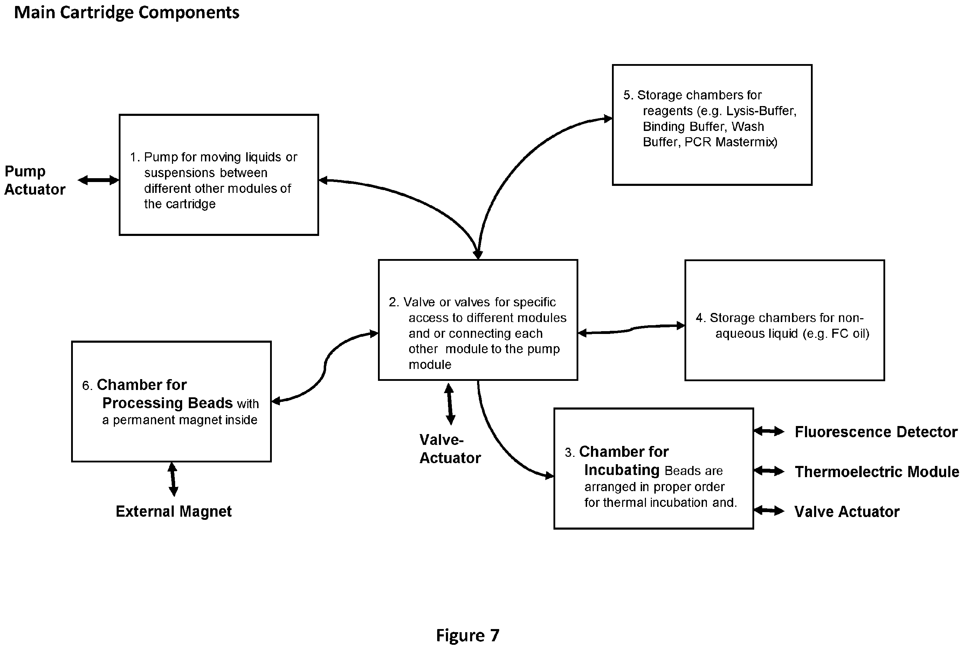

**Figure 7** shows a block diagram of an example of a liquid handling and processing tool (= "cartridge"). In this figure, the exemplary cartridge comprises six main functional modules:
1. An integrated pump module is provided to move liquids between different other modules or chambers. The pump module interfaces with a pump actuator on the instrument.
2. A valve block or a rotary valve provide for a controlled liquid interface between the different chambers and the pump module, the valves interface with valve actuators.
3. An incubation and detection chamber designed for concentrating the beads and arranging them in monolayer formation, and for temperature incubation and fluorescence detection of the beads. The chamber is equipped with valves providing for closed operation.
4. One or more storage chambers for liquids immiscible with aqueous solutions.
5. One or more storage chambers for reagents provided dry or re-suspended in aqueous buffers.
6. One or more Bead processing chambers containing a permanent magnet and interfacing with an external magnet that is used to apply static and alternating electromagnetic fields to the chamber.

(A "module", as used in this context, is meant to refer to an entity that performs a particular designated function or task within a liquid handling and processing tool. In a simple scenario, such "module" is to be equated with a single chamber, for example a chamber that stores certain reagents or liquids or that acts as a storage chamber, sink, waste, reservoir or overflow. In another case, such "module" may be a series of chambers acting together to perform a particular designated task. In another scenario, such "module" may comprise entities other than chambers, such as a piston, an actuator, a pump, a conduit, etc. alone or together with one or several chambers.)

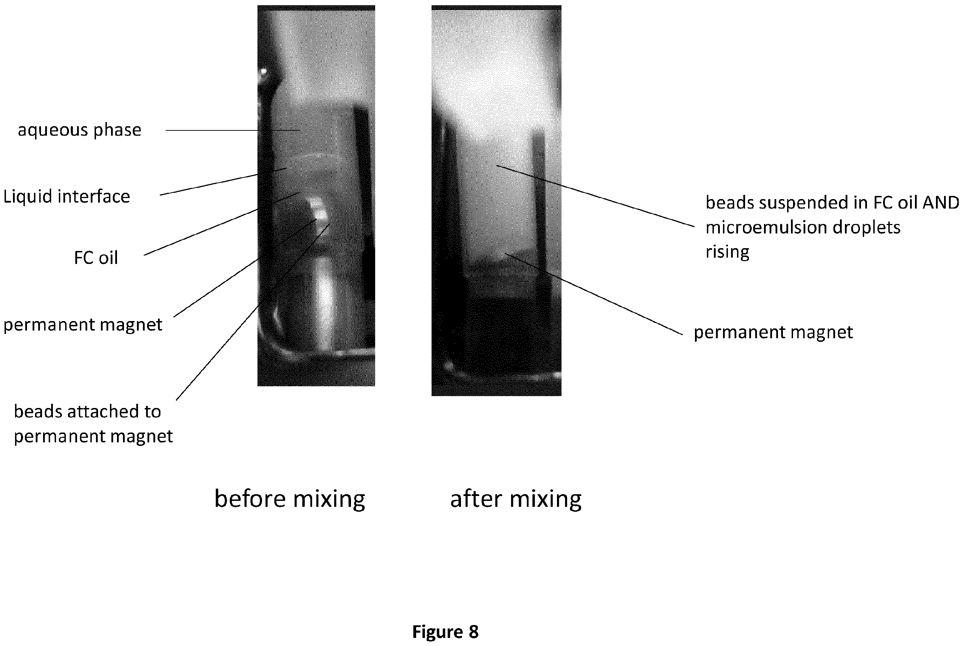

**Figure 8** shows two photographic images of an embodiment of a chamber for processing microparticles, at two different stages ("before mixing" (left-hand side) and "after mixing" (right-hand side)) of the method for processing microparticles. Shown on the left ("before mixing") is the chamber comprising a freely movable permanent magnet situated within the volume of said chamber and microparticles ("beads") attached thereto. The permanent magnet is located and immersed within a fluorocarbon oil (FC oil) phase which is overlayed with an aqueous phase containing PCR master mix (containing necessary reagents for performing a polymerase chain reaction (PCR). There is also an interface visible which interface is between the oil phase and the aqueous phase. In the left photograph, a permanent external magnetic field is applied to the chamber, and therefore the permanent magnet is oriented and held stationary at a defined position within the chamber, accordingly. Beads remain attached to the freely movable but stationary permanent magnet, inspite of having a density similar to the aqueous fluid on top of the oil and lower than the oil itself. Because the microparticles ("beads") are attached to the freely movable but stationary permanent magnet, they do not rise to the interface, but remain attached to the freely movable magnet.

During the process, and starting from the left-hand panel/photograph, the beads and the aqueous liquid become suspended in fluorocarbon oil by moving the permanent magnet using a magnetic field generated outside of said chamber (step c) of the method for processing microparticles, which magnetic field is alternatingly changed (step d) of the method for processing microparticles) such that said permanent magnet rotates and/or moves in order to align with the (changed) magnetic field, such that a chaotic mixing ensues, and such that shear forces act upon said magnetic microparticles which are therefore moved within said volume of saiud chamber as a result of which the magnetic microparticles become detached from the permanent magnet and form a suspension of microparticles within said oil phase. Because of the harsh and violent movement of the magnet, also the aqueous phase previously overlaying the oil phase is emulsified, and a microemulsion of droplets forms along with the suspension of beads in oil.

On the right hand of figure 8 ("after mixing"), the figure shows a state shortly after such chaotic mixing within the chamber. The cloudy appearance of the emulsion indicates a highly dispersed aqueous droplet emulsion and suspension of magnetic beads (indicated by the grey/brown color), the microparticles and microemulsion have a lower density than the non-aqueous phase (FC oil) and therefore eventually rise. The image is taken when the external magnetic field is switched off and the permanent magnet within the chamber is allowed to drop.

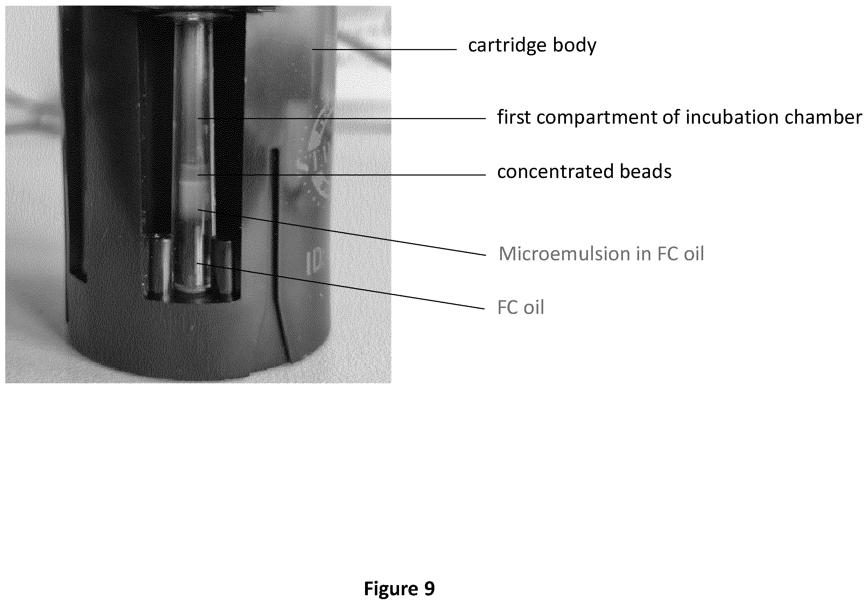

**Figure 9** shows a photograph of an embodiment of a chamber for incubating and detecting, as it is situated within an embodiment of a liquid handling and processing tool ("cartridge"). More specifically, a first compartment of said chamber for incubating and detecting is shown holding a suspension of microparticles ("beads") which have been concentrated within said first compartment, as indicated in the figure. Also shown is a "microemulsion" of an aqueous solution, for example of a PCR-mastermix (required necessary reagents for PCR), in oil (water-in-oil emulsion, referred to in the figure as "microemulsion in FC oil" - these are little aqueous droplets emulsified in the oil phase) underneath the concentrated microparticles (the aqueous droplets have a lower buoyancy due to a lower droplet volume). Due to their buoyancy and the difference of densities between the microparticles and the oil, microparticles have risen to an upper end of the first compartment. As a result thereof, the microparticles begin to concentrate and accumulate at an upper end in the first compartment of said chamber for incubating and detecting.

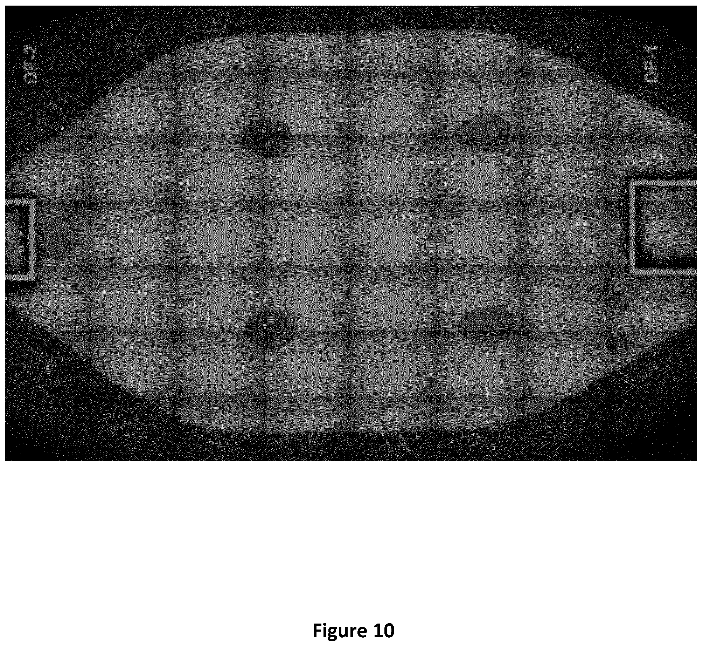

**Figure 10** shows an image (stitched from several individual fluorescent images)of an embodiment of a second compartment of said chamber for incubating and detecting in which microparticles have been arranged in a dense packing arrangement, in accordance with a process for accommodating microparticles in a dense packing arrangement in a volume of a chamber for incubating and detecting microparticles, as described herein. Because the second compartment of said chamber has a transparent wall configured to be interrogated by an optical sensor, the individual microparticles can be "seen" through said transparent wall. Also shown on the right and left middle of the photograph are squares on the right and left of said chamber, respectively. These squares shown at DF-1 and DF-2 in the figure are used as detection windows for an automated chamber filling process. Their positions are in vicinity to the positions of the inlet opening and outlet opening, respectively.

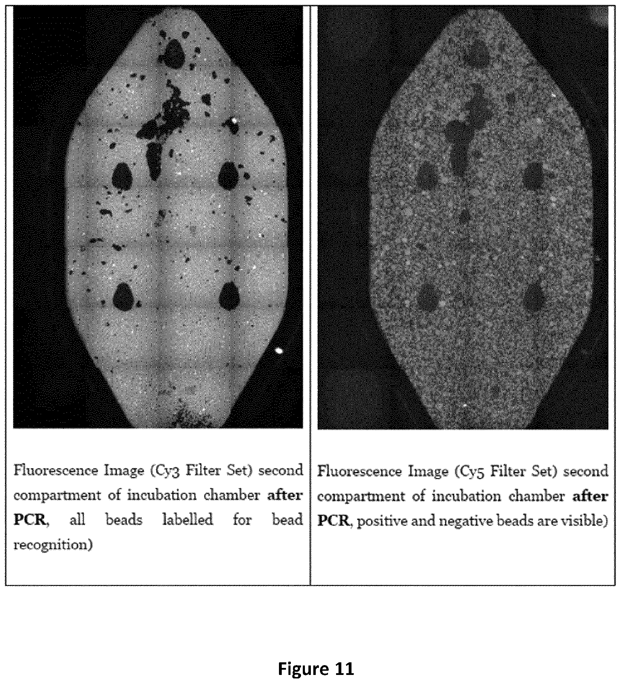

**Figure 11** shows two photographs of a second compartment of a chamber for incubating and detecting microparticles filled with microparticles, after a polymerase chain reaction (PCR) has been performed. On the left-hand image, all microparticles have been labeled and are detectable using an appropriate filter for microparticle recognition. On the right-hand image, the same second compartment is shown but with a different filter that allows to distinguish between microparticles being positive and negative (positive = PCR has resulted in amplification; negative = PCR has resulted in no amplification) are shown.

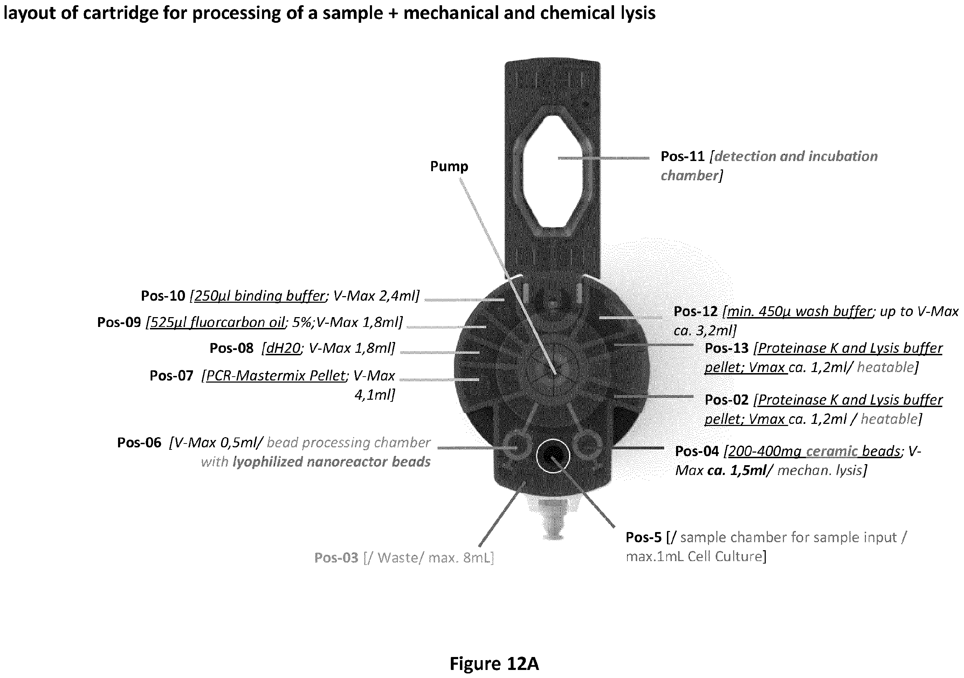

**Figure 12A** shows a top view of an embodiment of a liquid handling and processing tool in which a sample is processed involving a mechanical lysis of the sample in one chamber for processing (position 4 abbreviated and labelled in the figure as "Pos 4"), further involving a chemical lysis in two other chambers ("Pos 2" and "Pos 13"), and subsequent steps (such as binding, washing and amplifiying) are performed in a different chamber for processing ("Pos 6"). Such chamber for processing at "Pos6" will contain lyophilized magnetic microparticles ("lyophilized nanoreactor beads"), as for example disclosed in PCT/EP2022/080978, filed on November 7, 2022 by the present applicant, or International patent application No. PCT/EP2020/086171). Mechanical lysis of a sample is achieved by ceramic particles in "Pos 4", such as zirconium particles which can be moved within a chamber for processing by the permanent magnet within the chamber actuated by applying an alternating external magnetic field which will move the permanent magnet within the chamber and thus also move and mix the liquid and any particles located therein as well. As a result of such movement and mixing, the biological sample will be lysed.

Also shown in **Figure 12A** is a chamber for incubating and detecting ("Pos 11"), and a sample chamber for sample input ("Pos5").

Other chambers of the liquid handling and processing tool are filled with binding buffer, fluorocarbon oil, wash-buffer, proteinase K and guanidinium hydrochloride, as well as PCR reagents (referred to as "PCR-pellet" or "PCR-Mastermix Pellet", containing dried reagents for PCR, such as dNTPs, Mg salt, buffer, Taq polymerase, and optionally, primers and probes. Alternatively, suitable primers and/or probes may also be provided as parts of the lyophilized magnetic microparticles.

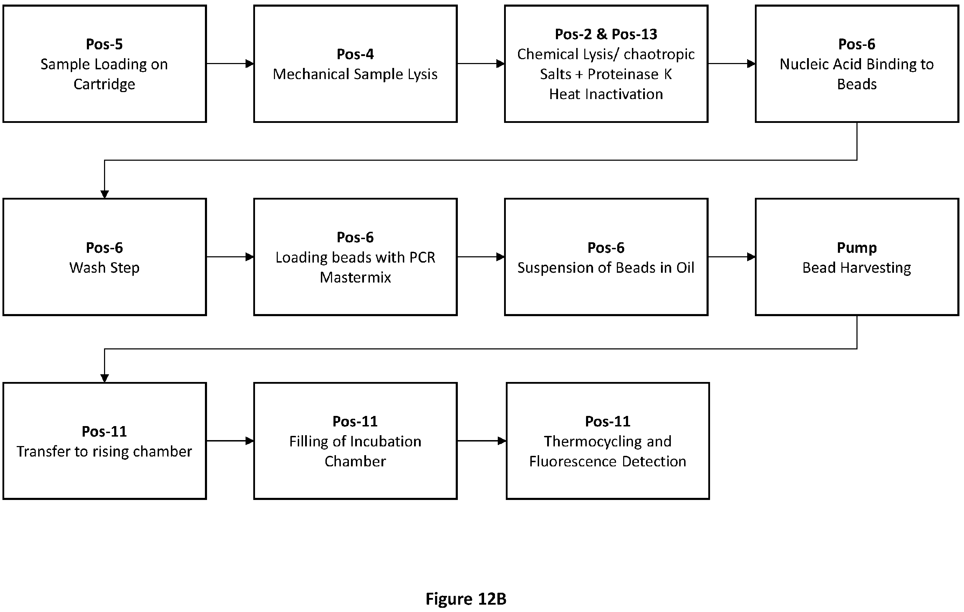

**Figure 12B** shows a flow diagram of the process envisaged for the layout of cartridge of Figure 12A. A sample is loaded in Pos-5 and subsequently lysed (mechanically in Pos-4, chemically in Pos-2 & -13). The lysate is then transferred to Pos-6 which is an example of a chamber for processing in accordance with the present invention and which contains lyophilized magnetic microparticles ("beads"), where nucleic acid binding to the microparticles ("beads") occurs. Thereafter, still within Pos-6, the beads are loaded with the necessary reagents for PCR, suspended in oil and harvested. The beads, together with the oil, are then transferred to Pos-11 which is an example of a chamber for incubating and detecting microparticles in accordance with the present invention. Here, the beads are concentrated within the first compartment (referred to in the figure as "rising chamber") and subsequently arranged in the second compartment (referred to in the figure as "incubation chamber"). Still within Pos-11, then nucleic acid amplification and detection of positive and negative beads ensue.

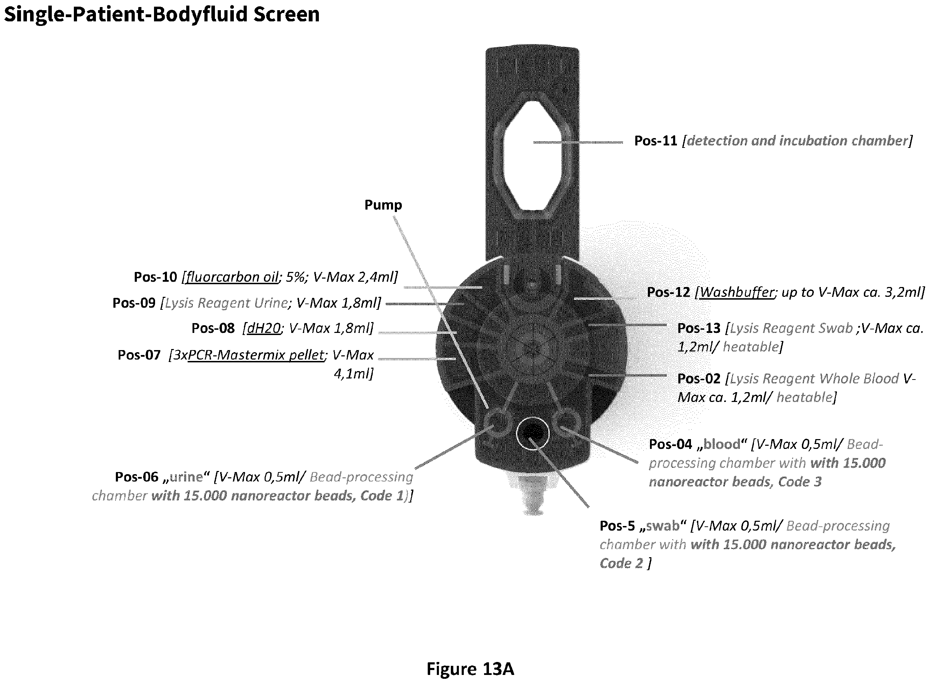

**Figure 13A** shows a top view of an embodiment of a liquid handling and processing tool ("cartridge"), which is intended to be used for a single patient wherein different body fluids/samples are examined. The samples are urine, blood, and a swab which are stored in different storage chambers and processed also in different processing chambers. Lysis of each sample is performed by chemical means in the presence of magnetic microparticles ("nanoreactors" or "nanoreactor beads").

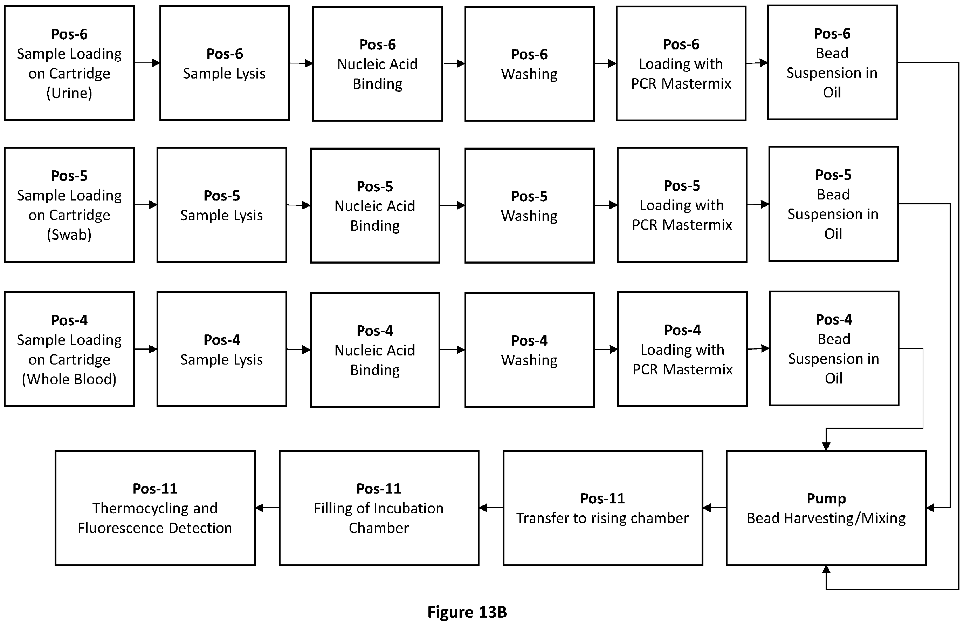

**Figure 13B** shows a flow diagram of the process envisaged for the layout of cartridge of Figure 13A. Three different samples, whole blood, swab and urine, are loaded separately in chambers for processing, Pos-4, Pos-5 and Pos-6, respectively, and subsequently chemically lysed in the same chambers, with magnetic microparticles ("nanoreactor beads") already being present in the chambers. Because of the presence of nanoreactor beads, lysis of each sample is performed by chemical means rather than mechanical means. Mechanical lysis would likely be too harsh for the beads and might lead to their destruction. Because the lysate is already in the same chamber as the respective nanoreactor beads, nucleic acid binding to the microparticles ("beads") may and will also occur in the same chamber. Thereafter, still within the same respective chamber, the beads are washed and subsequently loaded with the necessary reagents for PCR, suspended in oil and harvested. The beads, together with the oil, of all three samples are then transferred together to Pos-11 which is an example of a chamber for incubating and detecting microparticles in accordance with the present invention. Here, the beads are concentrated within the first compartment (referred to in the figure as "rising chamber") and subsequently arranged in the second compartment (referred to in the figure as "incubation chamber"). Still within Pos-11, then nucleic acid amplification and detection of positive and negative beads ensue. Because the beads will be coded in a sample specific manner (see Figure 13A, Codes 1 - 3), they can be easily distinguished in terms of the respective sample to which they belong.

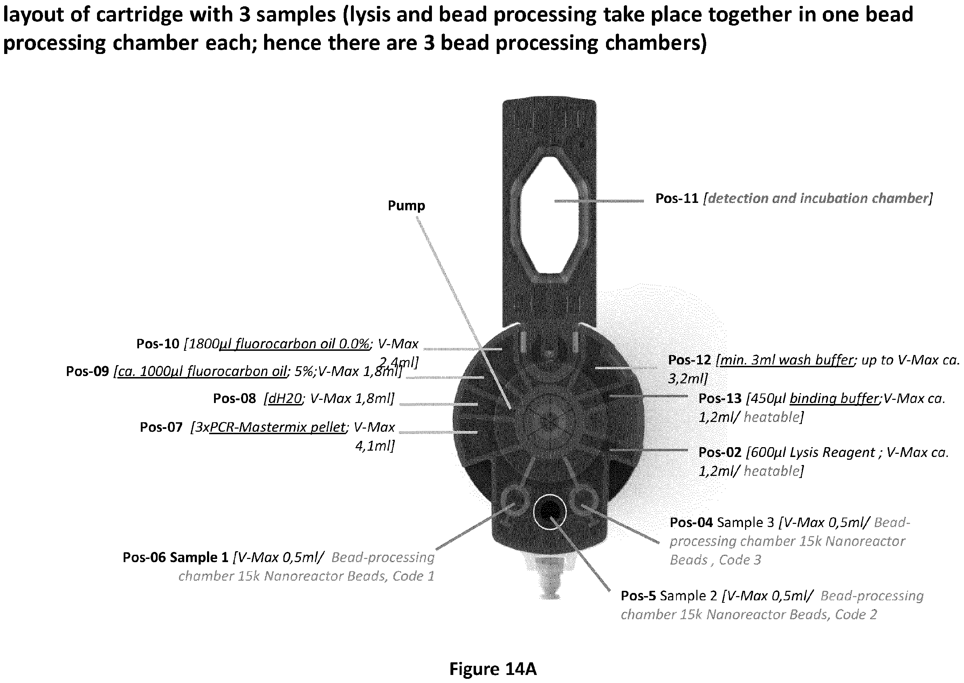

**Figure 14A** shows a top view of another layout of another embodiment of a liquid handling and processing tool wherein three samples (for example coming from three different patients) are processed in different chambers for processing, wherein furthermore within each chamber for processing a lysis and further processing of the respective sample takes place. Lysis is performed by chemical lysis in the presence of magnetic nanoreactors.

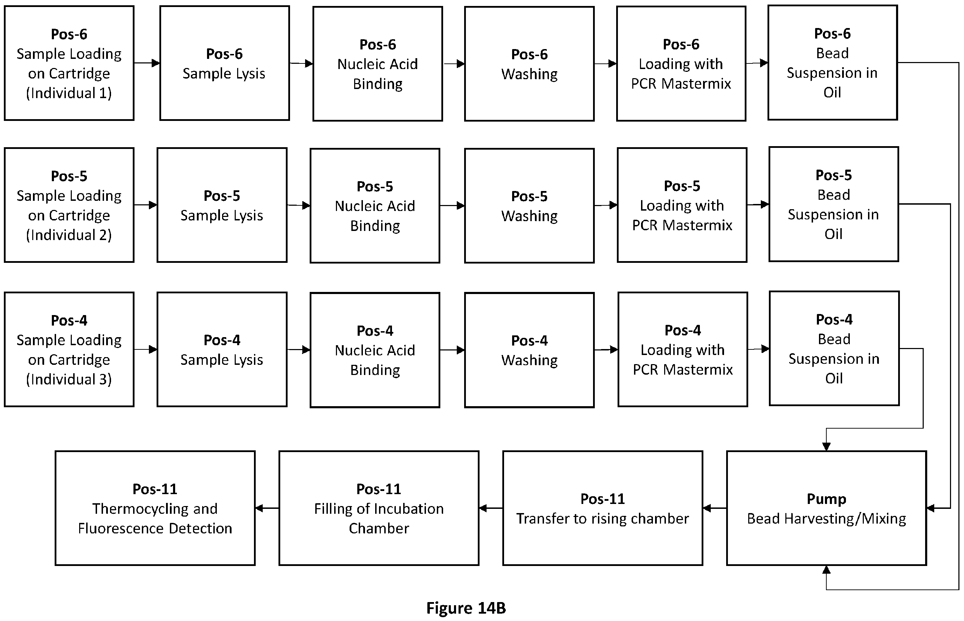

**Figure 14B** shows a flow diagram of the process envisaged for the layout of cartridge of Figure 14A. Three different samples, from three different individuals, are loaded separately in chambers for processing, Pos-4, Pos-5 and Pos-6, respectively, and subsequently chemically lysed in the same chambers, with magnetic microparticles ("nanoreactor beads") already being present in the chambers. Because of the presence of nanoreactor beads, lysis of each sample is performed by chemical means rather than mechanical means. Mechanical lysis would likely be too harsh for the beads and might lead to their destruction. Because the lysate is already in the same chamber as the respective nanoreactor beads, nucleic acid binding to the microparticles ("beads") may and will also occur in the same chamber. Thereafter, still within the same respective chamber, the beads are washed and subsequently loaded with the necessary reagents for PCR, suspended in oil and harvested. The beads, together with the oil, of all three samples are then transferred together to Pos-11 which is an example of a chamber for incubating and detecting microparticles in accordance with the present invention. Here, the beads are concentrated within the first compartment (referred to in the figure as "rising chamber") and subsequently arranged in the second compartment (referred to in the figure as "incubation chamber"). Still within Pos-11, then nucleic acid amplification and detection of positive and negative beads ensue. Because the beads will, again, be coded in a sample specific manner (see Figure 14A, Codes 1 - 3), they can be easily distinguished in terms of the respective sample to which they belong.

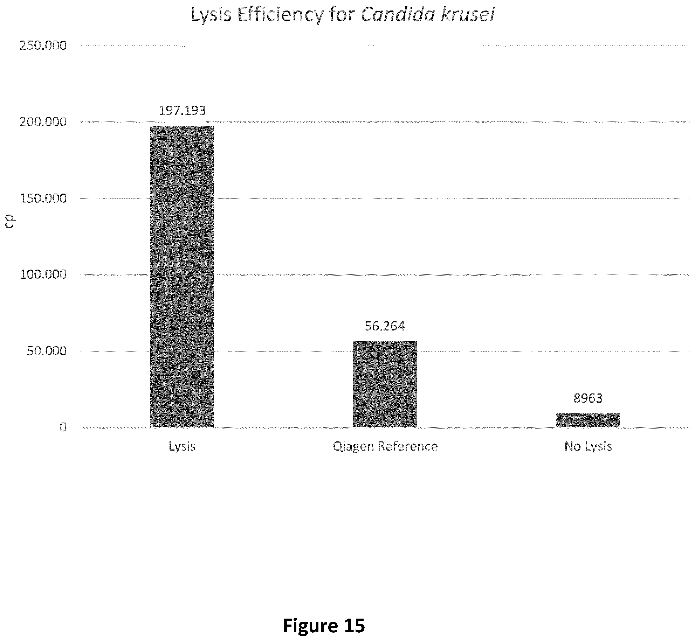

**Figure 15** shows the results of a mechanical lysis of *Candida crusei* cells using an embodiment of a chamber for processing microparticles using zirconium oxide microparticles. A defined number of such zirconium oxide microparticles is introduced into a chamber for processing microparticles, together with lysis buffer and cells of *Candida crusei.* As performed it is described in example 2 and the results are compared with a benchmark kit from Qiagen Germany (commercially available under the name "DNeasy Blood & Tissue sample preparation kit"). Also shown is a control where no lysis was performed. The numbers above the bars indicate the determined absolute copy number of DNA for each lysis sample. It becomes clear that the process used in accordance with embodiments of the present invention in the chamber for processing is considerably more efficient in terms of copy numbers when compared with a benchmark reference of Qiagen.

Moreover, reference is made to the following examples which are given to illustrate, not to limit the present invention.

### EXAMPLES

### Example 1

### Embodiment of a chamber for processing

The chamber for processing has a volume of approx. 0.6ml. It is equipped with an overflow opening and accommodates both the beads and the permanent magnet. The chamber is also designed to prevent the magnet from jamming or canting in any situation. A graphic representation of such chamber is shown in Figure 1 in standalone representation and figure 2 where such chamber has been incorporated into a liquid handling and processing tool ( = "cartridge")

The external electromagnet is made of two components: a C-shaped core (made of 0.5mm thick electrical sheets, 10 pieces on top of each other) and the coil (1014 turns of 0.4mm diameter enameled copper wire).

The coil is pulsed with a voltage of ±32V and a current of 2A. In addition, the entire electromagnet can be rotated about the axis of the coil via a stepper motor. By adjusting the rotation angle and applying a corresponding voltage to the coil, the position of the permanent magnet(s) within the bead processing chamber can be adjusted.

Three basic functionalities are enabled by the combination of a external electromagnet, integrated permanent magnet and the magnetic microparticles:
1. Dispersing the magnetic microparticles in liquids: this involves changing the polarity of the voltage with appropriate pause times (e.g. 3ms +32V, 150ms 0V, 3ms -32V, 150ms 0V; X repetitions for gentle mixing or 4ms +32V, 2ms 0V, 4ms -32V, 2ms 0V; X repetitions for emulsifying).
2. Collecting the suspended magnetic microparticles from the liquid foil or aqueous solution) on the permanent magnet: the magnet is moved slowly through the liquid, the applied voltage always remains positive or is zero (1ms +32V, 5ms 0V; X repetitions), the microparticles gradually accumulate on the magnet
3. Harvesting the magnetic microparticles from the chamber: the permanent magnet is quickly moved out of the liquid but still remains in the chamber so that no magnetic microparticles can stick to the magnet while the liquid is being aspirated (1ms +32V, 5ms oV; X repetitions) by suitable means; for example a pump exerting negative pressure.

The combination of the permanent magnet in the bead processing chamber and external electromagnet to generate a magnetic field has several advantages. First, the external magnetic field can be built up and changed very quickly. On the other hand, the excitation frequency of the electromagnet and the intrinsic rotational frequency of the permanent magnet are different, so that chaotic movements of the permanent magnet can be accomplished, resulting in rapid and uniform mixing or intermixing of the different components accommodated within the chamber. At the same time, the position of the permanent magnet can be easily adjusted depending on the filling level of the chamber so that the magnet moves exclusively in the liquid. This can be used to prevent formation of foam.

### Example 2

### Embodiment of a chamber for processing for use in mechanical lysis

In the following a mechanical lysis protocol is described wherein a biological sample is lysed in a chamber for processing microparticles, using ceramic microparticles (="beads"). With suchceramic microparticles essentially a bead milling process is accomplished.

To retain ceramic or other microparticles, the chamber for processing (="bead processing chamber (BPC)") was modified with sieve tissue (100µm mesh size) at the in- outlet opening at the bottom of the BPC. 200 mg Zirconium Oxide beads (Omni International, USA) with a diameter of 0.1 mm were loaded to the BPC. A disc shaped permanent magnet (Webcraft GmbH, Germany) with 1×1.5mm size was deposited in the sample processing chamber. *Candida krusei* has been used as a model organism for yeast cells to analyze the efficiency of the mechanical lysis method. *C.crusei* cells were pre-counted and after washing suspended in 600µL PBS buffer. The cell suspension has been added to the chamber for processing with the Zirconium oxide beads and the permanent magnet.

For bead beating, a magnetic field with alternating pole orientation (3ms each with a 5ms pause) was applied for 180s for agitating the ceramic beads by movement of the permanent magnet within the BPC. The magnetic coil unit was moved back and forth over the complete length of the chamber during mixing.

After bead beating supernatant was collected from the BPC and a fraction of 2µL from the supernatant was directly pipetted into 18µL PCR master-mix containing 0.4mM forward primer (GCATCGATGAAGAACGCAGC) (SEQ ID NO:1) and 0.4mM reverse primer (GACGCTCAAACAGGCATGC) (SEQ ID NO:2) and 0.2mM probe (ATTO647N-CGTGAATCATCGAGTCTTTGAACGC-BHQ2) (SEQ ID NO:3) for detection of the multi copy 18s rRNA gene from different candida species.

As a reference we have isolated Candida krusei DNA using the Qiagen DNeasy Blood & Tissue sample preparation kit (Qiagen, Germany) including the Supplementary Protocol for purification of total DNA from yeast. Yeast cells were resuspended in 600µL Sorbitol buffer and further processed according to the manufacturer's instructions. Extracted DNA was eluted with 2×200µl H₂O and 200µL H₂O were added prior transferring 2µL of the diluted eluate into 18µL PCR mix as described above. PCR was performed on a standard qPCR cycler (Thermofisher QuantStudio 3) with the following cycling conditions (95°C, 5min; 45 cycles with 95°C 15s and 61°C 30s).

In addition, a no-lysis control war performed to determine the amount of free *C.crusei* - DNA in the sample. This was done by applying 2µL of the spore suspension without any pretreatment directly to the PCR master-mix.

Results of the comparative analysis for the three samples are summarized in figure 16. The numbers above the bars indicate the determined absolute copy number for each method. Copy numbers were calculated based on a PCR-calibration curve previously generated with pre-quantified purified C.crusei-DNA.

### Example 3

### Embodiment of a process involving a liquid handling and processing tool (="cartridge")

The cartridge in this embodiment is designed to perform two different bead assays separately in two chambers for processing (="bead processing chambers" or ("BPCs")). A magnet (d = 4 mm; h = 1 mm) is present in both chambers. The bead slurry is pipetted onto this magnet and all chambers are closed with a lid.

The biological sample is placed in the sample chamber located between the BPCs. All reagents used in the respective assays are placed in the storage chambers. The sample chamber and all reagent chambers are closed after filling.

The cartridge is fixed in an appropriate instrument allowing for optical interrogation and heating and cooling, and mechanical interfacing for operating valves and the integrated pump. The assay workflow comprising the following steps is started via the operating software.

### A. Sample preparation on the beads in the BPC until PCR mastermix is added

First the elastomeric piston contained in the cartridge pump is contacted. The rod of the pump actuator moves into the pump body of the cartridge and attaches to the piston at a defined position.

### Bead conditioning

Binding buffer is drawn from the binding buffer chamber into the pump. Thereafter defined volumes of binding buffer are added to the respective processing chambers. Beads are incubated with binding buffer gently agitated by the magnets within the processing chambers.

### Sample Lysis

The lysis buffer is drawn from the respective storage chamber into the pump and transferred into the sample chamber. During the incubation period for lysis, the sample can be mixed by moving the liquid between the sample chamber and the pump. (Alternatively, an already lysed sample can be applied to the sample chamber).

### Binding

The lysate is drawn into pump and applied to the two processing chambers with the beads. Any residual material present in the pump is discarded to the waste chamber to reduce any potential carryover. Incubation under intense magnetic mixing in the processing chamber allows the analyte to bind to the beads. Subsequently, the beads are collected with the internal magnet and the liquid is removed from the processing chamber into the pump and is moved from there to the waste.

### Optional "Overflow"-Step

Immediately after lysis, the lysis buffer can also be removed by a special "overflow" wash step. For this purpose, the lysate is pushed upwards with excess wash buffer and poured into the waste space through on opening at the upper part (1.3.3) of the processing chamber. Such steps may be useful to remove efficiently lysis buffer foam and thus to ensure accurate liquid dosing subsequently. After brief mixing and subsequent collection of the beads on the internal magnet, the processing chamber is emptied again through the opening at the bottom of the chamber connecting it to the rotary valve. An aqueous residual volume of approx. 50 µl is left in the chamber so that beads do not dry out.

### Washing

A defined volume of wash buffer is pumped from the respective storage chamber to the processing chamber. The magnet is stirred briefly, but intense several times to detach the beads from the magnet and to ensure optimal liquid exchange around the beads. Then the beads are collected in the wash buffer on the magnet by a slow up and down movement of the magnet and the wash buffer is pulled out of the chamber and moved to the waste. The beads remain on the magnet in the processing chamber. Multiple wash steps can be performed, and different wash buffers can be used. A minimum aqueous residual volume of approx. 50 µl always remains on the beads so that they do not dry out.

### Addition of PCR reagents (mastermix)

From the respective storage chamber, the PCR mastermix is transferred onto the beads in the processing chamber. During the incubation, gentle stirring is performed cyclically with the magnet. A collection step (slow up and down movement of the magnet) binds the beads from the suspension to the internal magnet. The mastermix liquid is discarded into the waste.

### (Optional) Displacement of the aqueous phase with oil

To remove excess mastermix from the beads, fluorocarbon oil with emulsifier (Pico-Surf) is drawn from the respective storage chamber oil chamber to the processing chamber. While the beads remain attached to the internal magnet, the fluorocarbon oil completely displaces the mastermix and pushes it into the waste via the opening at the upper end of the processing chamber. Oil is then removed through the bottom opening and discarded into the waste.

### B. Phase Transfer

### Preparation of a bead suspension

From the respective chamber fluorocarbon oil is added to the beads in the processing chamber. A stable bead-oil suspension is produced from the beads and the fluorocarbon oil by chaotic and intense movements of the magnet in the processing chamber.

### Harvesting: Transferring the beads into the pump

The beads are briefly mixed by the magnetic mixer and now moved from the processing chamber into the pump volume. After the suspension has been transferred of the pump volume the beads are allowed to rise by buoyancy to the top of the liquid. Thus, beads are transferred into pump volume until all beads are removed from the processing chamber and only oil and some microemulsion remain in there. Optionally after separate processing of different samples in separate bead processing chambers (BPCs), the emulsified individual samples can now be combined in the pump.

### Transfer to rising chamber and reactor

The beads are then pushed from the pump to a first compartment of a chamber for incubation and detection (="incubation chamber"). After the entire volume has been transferred from the pump to the first compartment, a brief pause is applied to allow the beads to rise to the top of the liquid in the compartment (see figure 10). Subsequently, fluorocarbon oil is drawn into the central syringe of the cartridge and pushed into the riser tube to transport the beads upwards to the feed ramp of the second compartment of the incubation chamber.

### C. Loading of the detection chamber and PCR/detection

### Automatic filling of incubation chamber

Complete filling of the second compartment of the incubation chamber with beads is detected automatically. For this purpose, a detection window was defined at the reactor inlet (DF-1) and at the reactor outlet (DF-2) (see figure 10), at which first images are acquired before the compartment is filled (reference images). First the suspension is pushed in small increments (5 µl, 0.1 ml/min, 0-12 s wait). As soon as beads are detected at DF-1 a large volume step is performed (20 µl, 0.1 ml/min, 0-12 s wait). At this stage the compartment is not yet filled (approx. 80 %). Subsequently, 5 µl filling loops are made again. As soon as beads are visible at DF-2, the valve at the reactor outlet is closed.

The small-step sequence of the liquid addition steps and defined lag times prevent overfilling (loss of beads in the run-off channel) of the reactor chamber.

### PCR and Detection

After adjusting exposure and autofocus settings, a mosaic image of the chamber is taken before and after PCR with fluorescent filters as required for the respective probes and labels used with the beads. Also, thermocycling parameters for PCR are adjusted as needed. Beads are detected, and positive and negative beads can be distinguished using appropriate optical filters (see figure 11).

### Example 4

### Layout of a liquid handling and processing tool (="cartridize") for processing a sample and for performing mechanical and chemical lysis

The following protocol is performed using a liquid handling and processing tool with reagents accommodated in the respective chambers as shown in figure 12A. The process performed on the cartridge is shown in the flowchart in Figure 12B. The shown positions ("Pos-X", where X is an integer from 1 - 20) indicate the actual space in which the step is performed.

The following is a short version of a protocol for processing a sample of 1mL from cell culture, that has been transferred onto the cartridge to Position 5, as shown in figure 12A. Before the sample processing starts all dry reagents on the cartridge are re-suspended and made ready for use by a series of pump and valve steps.

### Mechanical sample lysis

- Transfer entire sample from Pos-5 to the Mechanical Lysis Chamber [MLC] [Pos-4]→ Pipette 2×500µl (to avoid contamination of the pump piston with sample )60 to 180s strong mixing of the magnet [field setting: 3ms ON;5ms OFF] with fast servo movement [speed 120;two different positions].
- aspirate the liquid from Pos-5 to Pump while the magnet in the MLC pulses in parallel (3ms ON;5-10ms OFF; Pos1/2:2050) to keep the ceramic beads milling beads moving in order to be able to aspirate the liquid from the chamber.

### Lysis/ Proteinase K treatment and heat inactivation

- the entire liquid is aspirated from Pos-5 to the pump and dispensed into Pos-2 and Pos-13, respectively, in aliquots of 500µL. The dry lysis reagents provided at Pos-2 and Pos-13 (Proteinase K and Guanidinium-Salts) are re-suspended during the process.
- During the filling the lysis chambers are heatedis heated up to 60°C and are thereafter kept at 60°C for 10 min to allow for Proteinase K treatment of the sample
- thereafter the temperature in the chamber sis increased to 95°C for for 5min to inactivate the Proteinase K enzyme
- heating is stopped and the liquid is allowed to cool down to room temperature
- The complete volume of liquid is moved from Pos-2 and Pos 13 to the Pos-10 containing 500µL of binding buffer solution
- after complete transfer of the lysate into the binding buffer chamber (Pos-10), a volume of 500µl is transferred back and forth between the chamber and the pump several times to mix the different liquids

### Nucleic Acid Binding to Beads

- 500µl of the binding mix is transferred via the pump to the bead processing chamber ("BPC") (Pos-6)
- The beads in the BPC are homogeneously distributed by the magnet under gentle mixing (1ms ON;2000ms OFF) at different positions of the servo (Pos:2050; 1750, 1450) to create the highest possible collision probability between the bead surface and the free DNA in the binding mix, this is done for 2:30 min at room temperature
- Subsequently, the beads are held on the magnet by applying an external electromagnetic field to the chamber (1ms ON; 5ms OFF without changing the polarity), then the magnet is held in the lower area (fluidic access) of the BPC and the supernatant (450µl) is aspirated from the chamber via the pump to the waste container (Pos-03)
- This process is repeated two more times, so that the entire binding mix from Pos-10 has been exposed to the beads in Pos-6

### Washstep

- 500µl from Pos-12 are transferred via the pump to Pos-6
- The magnet is moved once from the bottom to the top and back, mixing (3ms ON;5ms OFF), then the electromagnet is switched on and the movement of the coil is repeated to collect all beads on the magnet.
- After the magnet with the beads returned to the lower part of the BPC, the supernatant (500µl) is aspirated from Pos-6 and discarded to Pos-3.

This step can be repeated up to 6 times

### Loading Beads with PCR-Mastermix

- 100µl of dH20 from Pos-8 are moved to Pos-7 containing dry PCR-reagents ("PCR-Mastermix Pellet"), which are re-suspended.
- The complete liquid is then moved via the pump to Pos-6
- gentle rotation of the permanent magnet ensues to facilitate liquid exchange and even distribution of PCR mastermix across the beads in the chamber for 1 min
- The supernatant of 100µl is removed from the chamber via the pump to waste (Pos-3)

### Suspension of Beads in Oil

- 240µl of PicoSurf (fluorocarbon oil with 5% emulsifier) are transferred from Pos-9 to Pos-3 via the pump.
- beads are dispersed in oil for 3x12sec via intensive servo movement (speed:120) and a very intensive alternating magnetic field (₄ON₂OFF).
- the magnet is deliberately moved several times between the gas and liquid phases in order to form an optimal bead suspension.

Thereafter the protocol follows the steps *"Harvesting: Transferring the beads into the pump", "Transfer to rising chamber and reactor", "Automatic filling of incubation chamber", and "PCR and Detection" as* described in example 3.

### Example 5

### Layout of a liquid handling and processing tool (="cartridge") for processing different samples (body fluids) from a single patient

The cartridge can be equipped with reagents to accommodate a a process for the analysis of different sample types from a single patient . Figure 13A shows a possible layout of such a cartridge that may allow for the detection of biomarkers from urine, a swab and whole blood of a single patient. The actual protocol follow in essence the steps already outlined in detail in examples 3 and 4, with an emphasis to ensure that the different samples will be exposed to the right reagents and do not cross-contaminate the encoded beads in the respective BPC. The BPCs are operated making use of the permanent opening located in an upper region of the chamber (such operation is herein also sometimes referred to as "operation in overflow mode"). Such permanent opening is for example shown in figure 1, marked with 1.3.3), so that liquid exchange follows a uni-directional flow path and allows for addition of new liquids/reagents through the inlet at the bottom of the BPC and transfer to waste (Pos 3) through the permanent overflow opening located in an upper region of the BPC. The steps of lysis, washing, loading with PCR-reagents and bead suspension in oil are all performed in the respective chambers at Pos-6, Pos-5 and Pos-4. These positions also contain encoded nanoreactor beads, allowing for separate sample processing. Subsequently beads from the different BPC are collected in the pump and processed together in a unified workflow as outlined in examples 3 and 4 Sample-type specific data can be differentiated based on the bead code. The process is summarized in a flowchart in figure 13B.

### Example 6

### Layout of a liquid handling and processing tool (="cartridize") for processing different samples (body fluids), each from a different patient

The cartridge can be also equipped with reagents to accommodate a process for the simultaneous analysis of samples from different individuals. Figure 14A shows a possible layout of such a cartridge that allows for the detection of biomarkers from three different samples, which are encoded by the fluorescent code of the respective nanoreactor beads that the sample will be interrogated with. The actual protocol follows in essence the steps outlined in examples 3 and 4, with an emphasis to ensure that cross contamination will be prevented between different samples by using a liquid handling process which ensures that only liquids, that have not come into contact with any of the samples will be moved from the respective storage chambers to the respective BPC (Pos-6, Pos-5, Pos-4). The BPCs are operated making use of the permanent opening located in an upper region of the chamber (such operation is herein also sometimes referred to as "operation in overflow mode"). Such permanent opening is for example shown in figure 1, marked with 1.3.3), so that liquid exchange follows a uni-directional flow path and allow for addition of new liquids/reagents through the inlet at the bottom of the BPC and transfer to waste (Pos 3) through the permanent overflow opening located in an upper region of the BPC. Other than that, steps of lysis, washing, loading with PCR-reagents and bead suspension in oil are all performed in the respective chambers at Pos-6, Pos-5 and Pos-4 individually for the respective samples. These positions also contain encoded nanoreactor beads, allowing for separate sample processing. Mixing of the Beads occurs in the pump compartment as part of the harvesting process. Thereafter the mixed beads are processed as one sample according to the protocol outlined before in example 3 and 4. Sample-type specific data can be differentiated based on the bead code. The specific process is summarized in a flowchart in figure 14B.

### List of reference numerals

**1** chamber for processing magnetic microparticles ("chamber for processing")
**1.1** volume of chamber for processing
**1.2** at least one wall of chamber for processing
**1.2.1** upper part of said at least one wall forming said upper region of chamber for processing **1.3** upper end of chamber for processing
**1.3.1** cap or seal closing said upper end of chamber for processing
**1.3.2** upper region of chamber for processing located below and adjacent to upper end of chamber
**1.3.3** permanent opening located in said at least one wall in said upper region
**1.4** lower end of chamber for processing
**1.4.1** narrow end of chamber for processing when said chamber, preferably said volume of said chamber, has shape of truncated cone
**1.4.2** wide end of chamber for processing when said chamber, preferably said volume of said chamber, has shape of truncated cone
**1.5** freely movable permanent magnet situated within volume **1.3** of chamber for processing
**2** device for performing method for processing magnetic microparticles
**2.1** external magnet
**2.2** actuator
**3** chamber for incubating and detecting microparticles ("chamber for incubating and detecting")
**3.1** first compartment of said chamber for incubating and detecting
**3.1.1** volume of said first compartment ("first volume")
**3.1.2** inlet opening of said first compartment
**3.1.3** outlet opening of said first compartment
**3.1.4** upper end of said first compartment
**3.1.5** lower end of said first compartment
**3.2** second compartment of said chamber for incubating and detecting
**3.2.1** volume of said second compartment ("second volume")
**3.2.2** inlet opening of second compartment
**3.2.2.1** reversibly closing inlet valve of second compartment
**3.2.3** outlet opening of second compartment
**3.2.3.1** reversibly closing outlet valve of second compartment
**3.2.4** frame of second compartment
**3.2.4.1, 3.2.4.1'** side walls of frame of second compartment
**3.2.4.2** upper wall of frame
**3.2.4.3** lower wall of frame
**3.2.4.4** spacer pillar within said second volume
**3.2.5** conduit
**3.2.5.1** filter of conduit
**4** liquid handling and processing tool for establishing a fluidic connection to ro from a chamber and/or for effecting a flow of liquid to or from a chamber (= "cartridge")
**4.1** housing of liquid handling and processing tool
**4.1.1** central space of housing
**4.1.2, 4.1.2', 4.1.2"** plurality of chambers for holding reagent(s) or receiving liquid(s)
**4.1.3** at least one interface for fluidically connecting a separate chamber for processing microparticles (1) to housing (4.1) of liquid handling and processing tool (4) (= "processing interface")
**4.1.4** at least one interface for fluidically connecting a separate chamber for incubating and detecting microparticles (3) to housing (4.1) of liquid handling and processing tool (4) (= "incubating interface")
**4.2** fluid displacement chamber
**4.2.1** upper end of said fluid displacement chamber
**4.2.2** lower end of said fluid displacement chamber
**4.2.3** volume of said fluid displacement chamber
**4.2.3.1** upper part of said volume of said fluid displacement chamber
**4.2.3.2** adjacent lower part of said volume of said fluid displacement chamber
**4.2.3.2.1** narrow part of cone or truncated cone
**4.2.3.2.2** wide part of cone or truncated cone
**4.2.4** movable piston of said fluid displacement chamber
**4.3** valve located at lower end **(4.2.2)** of fluid displacement chamber
**5** plurality of microparticles, preferably magnetic microparticles

## Claims

1. A method for processing magnetic microparticles, in particular for exposing magnetic microparticles to a liquid and/or for generating a dispersion of magnetic microparticles in a liquid, said method comprising the steps:
a) Providing, in any order, a first liquid, a plurality of magnetic microparticles, and a chamber having a volume for receiving a liquid and a plurality of magnetic microparticles therein; said chamber further comprising a freely movable permanent magnet situated within said volume;
b) introducing, in any order, said first liquid and said plurality of magnetic microparticles into said volume of said chamber, and allowing said plurality of magnetic microparticles to be immersed in and distributed within said first liquid and to be attracted to, and, preferably, to adhere to said freely movable permanent magnet;
c) generating a user-definable magnetic field, preferably a user-definable electromagnetic field, outside of said chamber such that said generated user-definable magnetic field, preferably said user-definable electromagnetic field, exerts a magnetic force on said permanent magnet situated within said volume, such that said permanent magnet is held at a defined fixed position within said volume;
d) changing said user-definable magnetic field, preferably said user-definable electromagnetic field, and thus the magnetic force exerted thereby, such that said permanent magnet rotates in order to align with said magnetic field, preferably said electromagnetic field, and such that shear forces act upon said magnetic microparticles which are therefore moved within said volume, wherein, preferably, during such movement, a majority of said plurality of magnetic microparticles, preferably all of said plurality of magnetic microparticles, become detached from said permanent magnet, distributed and dispersed within said first liquid.

2. The method according to claim 1, wherein said user-definable magnetic field is a user-definable electromagnetic field.

3. The method according to any of claims 1-2, wherein, in step d), said changing said user-definable magnetic field, preferably said user-definable electromagnetic field, involves a change of at least one of:
- position,
- polarity, when the magnetic field is a direct current (DC) electromagnetic field,
- frequency, when the magnetic field is an alternating current (AC) electromagnetic field, and
- strength,
of said user-definable magnetic field, preferably of said user-definable electromagnetic field, preferably a change of position, more preferably a change of position and polarity, more preferably a change of position, polarity and frequency, of said user-definable magnetic field, preferably of said electromagnetic field.

4. The method according to any of claims 1-3, wherein step d) is performed a number of n times, wherein n is an integer in the range of from 1 to 1000, preferably 1 to 500, more preferably 1 to 200, even more preferably 1 to 100, and most preferably wherein n is selected from 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99 and 100.

5. The method according to any of claims 1-4, wherein said magnetic field is an electromagnetic field, and said method further comprises the step:
e*) ending step d), and either: maintaining said user-definable electromagnetic field constant, or switching said user-definable electromagnetic field off;
and
immediately after reaching a constant user-definable electromagnetic field or after switching said used-definable electromagnetic field off, physically separating said plurality of magnetic microparticles from said permanent magnet before said plurality of magnetic microparticles adhere to said permanent magnet, wherein such physical separation occurs by either removing said plurality of magnetic microparticles immersed in and distributed within said first liquid from said volume, before said plurality of magnetic microparticles adhere to said permanent magnet, or by removing said permanent magnet from said volume, before said plurality of magnetic microparticles adhere to said permanent magnet; whereby, by such removal of said plurality of magnetic microparticles or of said permanent magnet, said magnetic microparticles remain dispersed in said first liquid.
6. The method according to any of claims 1-4, wherein said magnetic field is an electromagnetic field, and said method further comprises the step:
e) ending step d), and either: maintaining said user-definable electromagnetic field constant for a sufficient time allowing said plurality of magnetic microparticles to adhere to said permanent magnet again and such that said permanent magnet is held at a defined fixed position within said volume,
or
switching said user-definable electromagnetic field off for a sufficient time allowing said plurality of magnetic microparticles to adhere to said permanent magnet again and such that said permanent magnet sinks to and resides on a bottom of said chamber.
7. The method according to claim 6, wherein said method further comprises the steps:
f) Removing said first liquid from said volume, whilst said plurality of magnetic microparticles adhere to said permanent magnet and whilst said permanent magnet is held at a defined fixed position within said volume or resides on a bottom of said chamber, thereby separating said first liquid from said plurality of magnetic microparticles which remain adhered to said permanent magnet;
g) Providing a second liquid different from said first liquid and introducing said second liquid into said volume, and allowing said permanent magnet and said plurality of magnetic microparticles adhered to it, to be immersed in said second liquid.
8. The method according to claim 7, wherein said method further comprises the step:
if step e) is ending step d) and maintaining said user-definable electromagnetic field constant:
h) continuing to hold said permanent magnet at a defined fixed position within said volume by maintaining said user-definable electromagnetic field constant;
or if step e) is ending step d) and switching said user-definable electromagnetic field off:
h*) generating a user-definable electromagnetic field outside of said chamber again, such that said generated user-definable electromagnetic field exerts a magnetic force on said permanent magnet situated within said volume, such that said permanent magnet is held at a defined position within said volume.
9. The method according to claim 8, wherein said method further comprises the step:
i) changing said user-definable electromagnetic field and thus the magnetic force exerted thereby, such that said permanent magnet rotates in order to align with said electromagnetic field, and such that shear forces act upon said magnetic microparticles which are therefore moved within said volume, wherein, preferably, during such movement, a majority of said plurality of magnetic microparticles, more preferably, all of said plurality of magnetic microparticles, become detached from said permanent magnet, distributed and dispersed within said second liquid; wherein, preferably, in step i) said changing said user-definable electromagnetic field involves a change of position, more preferably a change of position and polarity, more preferably a change of position, polarity and frequency, of said user-definable electromagnetic field.
10. The method according to claim 9, wherein said method further comprises the step:
j) ending step i), and either: maintaining said user-definable electromagnetic field constant, again,
or
switching said user-definable electromagnetic field off, again;
and
immediately after reaching a constant user-definable electromagnetic field or after switching said user-definable electromagnetic field off, again;
physically separating said plurality of magnetic microparticles from said permanent magnet before said plurality of magnetic microparticles adhere to said permanent magnet, wherein such physical separation occurs by either removing said plurality of magnetic microparticles distributed and dispersed within said second liquid from said volume, before said plurality of magnetic microparticles adhere to said permanent magnet, or by removing said permanent magnet from said volume, before said plurality of magnetic microparticles adhere to said permanent magnet; whereby, by such removal of said plurality of magnetic microparticles or of said permanent magnet, said magnetic microparticles remain dispersed in said second liquid.
11. The method according to any of the foregoing claims, wherein said chamber is a tube-like chamber having at least one wall, wherein said volume for receiving a liquid and a plurality of magnetic microparticles is enclosed by said at least one wall, wherein said chamber further comprises an upper end which may, optionally, be closed by a cap or a seal.
12. The method according to claim 11, wherein said tube-like chamber furthermore has a longitudinal axis, wherein said volume for receiving a liquid and a plurality of magnetic microparticles extends along said longitudinal axis of said chamber, wherein said chamber further comprises a lower end configured to be reversibly opened and closed by a valve, said lower end acting as an inlet for liquid into said volume, or acting as an inlet and outlet for liquid into and from said volume; wherein said chamber further has an upper region located below and adjacent to said upper end formed by an upper part of said at least one wall, and wherein said upper region of said chamber comprises a permanent opening located in said at least one wall.
13. The method according to any of the foregoing claims, wherein said volume of said chamber has a shape of a truncated cone, wherein a narrower end of said truncated cone is located at said lower end of said chamber, and a wider end of said truncated cone is located at said upper end of said chamber.
14. The method according to any of the foregoing claims, wherein said first liquid is an aqueous liquid having an aqueous phase, and said second liquid, if provided according to any of claims 7 - 13, is a non-aqueous liquid having a non-aqueous phase, preferably an oil phase.
15. A chamber (1) for processing magnetic microparticles, configured to be used in a method according to any of claims 1 - 14, wherein said chamber has a volume (1.1) for receiving a liquid and a plurality of magnetic microparticles therein, a longitudinal axis and at least one wall (1.2); wherein said volume for receiving a liquid and a plurality of magnetic microparticles therein extends along said longitudinal axis of said chamber and is enclosed by said at least one wall; wherein said chamber further comprises an upper end (1.3) which may, optionally, be closed by a cap or seal (1.3.1), and a lower end (1.4) configured to be reversibly opened and closed by a valve; said lower end acting as an inlet for liquid into said volume, or acting as an inlet and outlet for liquid into and from said volume; wherein said chamber further has an upper region (1.3.2) located below and adjacent to said upper end and formed by an upper part (1.2.1) of said at least one wall, and wherein said upper region of said chamber comprises a permanent opening (1.3.3) located in said at least one wall; wherein said chamber further comprises a freely movable permanent magnet (1.5) situated within said volume.
16. The chamber according to claim 15, wherein said chamber is a tube-like chamber and has a shape of a truncated cone, wherein a narrow end (1.4.1) of said truncated cone is located at said lower end of said chamber, and a wide end (1.4.2) of said truncated cone is located at said upper end of said chamber.
17. The chamber according to any of claims 15 - 16, wherein said permanent opening located in said upper region of said chamber is configured to act as an inlet of gas, in particular air, or as an outlet of gas or liquid; wherein said permanent opening either is a an opening without a closure, allowing free access and exit, of matter, to and from said volume of said chamber, or it is an opening comprising a filter, such filter preferably being configured to withhold particles > 100µm, or being configured to be self-sealing upon contact with liquid.
18. A device (2) for performing the method according to any of claims 1 - 14, said device comprising a chamber for processing magnetic microparticles (1) according to any of claims 15 - 17, an external magnet (2.1) and an actuator (2.2); wherein said external magnet is located in vicinity to said chamber for processing magnetic microparticles, such that it exerts a magnetic force on said freely movable permanent magnet situated within said volume of said chamber, and such that said freely movable permanent magnet is held at a defined fixed position within said volume; wherein said external magnet is an electromagnet or a permanent magnet; wherein a positioning of said external magnet in relation to said chamber is achieved by said actuator.
19. A chamber (3) for incubating and detecting microparticles, especially magnetic microparticles, in particular for performing and detecting a chemical/biochemical reaction using said microparticles, e.g. an amplification reaction using said microparticles, said chamber for incubating and detecting microparticles being a bipartite chamber and comprising:
- a first compartment (3.1) having a first volume (3.1.1), said first compartment being configured for a process of concentrating microparticles within said first volume in a suspension of said microparticles in a liquid surrounding said microparticles, said process of concentrating within said first volume making use of a density difference between said microparticles and said liquid surrounding said microparticles; said first compartment having an inlet opening (3.1.2) and an outlet opening (3.1.3) allowing the in-and outflow of a liquid or suspension into and out of said first volume, respectively;
- a second compartment (3.2) having a second volume (3.2.1), said second compartment being configured for accommodating said concentrated microparticles within said second volume in a dense packing arrangement, said second compartment being configured for thermal incubation and detection of said microparticles arranged in a dense packing arrangement; said second compartment having an inlet opening (3.2.2) and an outlet opening (3.2.3) allowing the in- and outflow of a liquid or suspension into and out of said second volume, respectively, wherein said inlet opening and said outlet opening have a reversibly closing inlet valve (3.2.2.1) and outlet valve (3.2.3.1), respectively, allowing for the reversible closing of said inlet opening (3.2.2) and outlet opening (3.2.3), respectively, and thus for sealing of said second volume (3.2.1) if both valves are closed;
wherein said first (3.1) and said second compartment (3.2) are fluidically connected with each other through said inlet opening (3.2.2) of said second compartment, allowing for the flow of a suspension of concentrated microparticles from the first volume into the second volume if said inlet valve (3.2.2.1) is open.
20. The chamber according to claim 19, wherein said first compartment configured for a process of concentrating microparticles within said first volume, is either a riser pipe or a down pipe, each of said riser pipe and said down pipe having an upper end (3.1.4) and a lower end (3.1.5), wherein, if said first compartment is a riser pipe, said riser pipe is fluidically connected to said inlet opening (3.2.2) of said second compartment at said upper end (3.1.4) of said riser pipe via said inlet valve (3.2.2.1) of said second compartment and said outlet opening of said first compartment (3.1.3), and wherein, if said first compartment is a down pipe, said down pipe is fluidically connected to said inlet opening (3.2.2) of said second compartment at said lower end (3.1.5) of said down pipe via said inlet valve (3.2.2.1) of said second compartment and said outlet opening of said first compartment (3.1.3).
21. The chamber according to any of claims 19 - 20, wherein said second compartment comprises a frame (3.2.4) encompassing said second volume (3.2.1), said frame having side walls (3.2.4.1, 3.2.4.1'), an upper wall (3.2.4.2) and a lower wall (3.2.4.3) located opposite to said upper wall, said lower wall preferably being parallel to said upper wall; said second volume (3.2.1) being enclosed by said side walls (3.2.4.1, 3.2.4.1'), said upper (3.2.4.2) and said lower wall (3.2.4.3); wherein one of said upper wall and said lower wall, preferably said upper wall, is a transparent wall configured to be interrogated by an optical sensor; and wherein the other of said upper wall and said lower wall, preferably said lower wall, is a wall having low heat conduction resistivity and is configured to be contacted by a temperature regulating device; wherein, preferably, a distance between said upper wall and said lower wall is in the range of from 10 um to 500 um, more preferably, in the range of from 20 um to 300 um, more preferably, in the range of from 50 um to 250 um, more preferably 50 um to 200um, and even more preferably 100 um to 200 um.
22. The chamber according to any of claims 19 - 21, wherein said inlet opening (3.2.2) and said outlet opening (3.2.3) are formed by or comprise an elastomeric material, and wherein said inlet valve (3.2.2.1) and said outlet valve (3.2.3.1) comprisefirst closing means and second closing means, respectively, configured to be independently pressed against or inserted into said inlet opening and said outlet opening, respectively, and to thereby squeeze said elastomeric material and to thereby reversibly close said inlet opening and said outlet opening in a pressure tight manner, allowing for a build-up of pressure in said second compartment, wherein, preferably, said first closing means and second closing means are independently selected from rods, bars, sticks, strips, pillars, clamps, clips, and clasps.
23. The chamber according to any of claims 19 - 22, wherein said upper and said lower wall of said second volume are held apart by at least one spacer pillar (3.2.4.4) situated within said second volume and being in contact with said upper and lower wall, thereby preventing said upper and lower wall from collapsing; wherein, preferably, said upper wall and said lower wall are held apart by two, three, four, five or more spacer pillars situated within said second volume which are evenly distributed in said second volume and which are in contact with said upper and lower wall, thereby preventing said upper and lower wall from collapsing.
24. The chamber according to any of claims 19 - 23, wherein said outlet opening (3.2.3) of said second volume is connected to a conduit (3.2.5) that is permanently open and that serves as a vent; wherein, preferably, said conduit comprises a filter (3.2.5.1) configured to withhold particles > 100µm, or being configured to be self-sealing upon contact with liquid.
25. The chamber for processing magnetic microparticles according to any of claims 15 - 17, or the chamber for incubating and detecting microparticles according to any of claims 19 - 24, said chamber further comprising a plurality of magnetic microparticles (5), preferably dispersed in a liquid, which is an aqueous phase or a non-aqueous phase when said chamber is a chamber for processing magnetic microparticles, and which is a non-aqueous phase when said chamber is a chamber for incubating and detecting microparticles.
26.A liquid handling and processing tool (4) for establishing a fluidic connection to or from a chamber and/or for effecting a flow of liquid to or from a chamber, said liquid handling and processing tool comprising:
- a housing (4.1) including a central space (4.1.1) and a plurality of chambers (4.1.2, 4.1.2', 4.1.2") for holding reagent(s) or receiving liquid(s) being arranged around said central space (4.1.1);
- a fluid displacement chamber (4.2) having an upper (4.2.1) and a lower end (4.2.2), said fluid displacement chamber encompassing a volume (4.2.3) for receiving, handling and moving a liquid, said volume (4.2.3) for receiving and handling a liquid having an upper part (4.2.3.1) and an adjacent lower part (4.2.3.2), said upper part (4.2.3.1) having a cylindrical shape, said adjacent lower part (4.2.3.2) having a shape of a cone or truncated cone, said cone or truncated cone being positioned upside-down within said fluid displacement chamber (4.2) such that a narrow part (4.2.3.2.1) of said cone or truncated cone is located at said lower end (4.2.2) of said fluid displacement chamber and a wid part (4.2.3.2.2) of said cone or truncated cone transitions into said upper part (4.2.3.1) of said volume;
said fluid displacement chamber (4.2) further having a movable piston (4.2.4) located in said upper part (4.2.3.1) of said volume (4.2.3) and snugly fitting therein, said piston being dimensioned such that it is movable within said upper part (4.2.3.1) of said volume, but is not movable into or within said adjacent lower part (4.2.3.2) of said volume;
wherein said fluid displacement chamber (4.2) is located in said central space (4.1.1) of said housing (4.1), and said plurality of chambers (4.1.2, 4.1.2', 4.1.2") are arranged around said fluid displacement chamber (4.2);
- a valve (4.3) located at the lower end (4.2.2) of said fluid displacement chamber (4.2) and allowing to establish a single fluidic connection from said fluid displacement chamber (4.2) to a selected chamber of the plurality of chambers (4.1.2, 4.1.2', 4.1.2").
27. The liquid handling and processing tool according to claim 26, wherein:
- said housing (4.1) further comprises at least one interface (4.1.3) for fluidically connecting a separate chamber for processing microparticles (1) according to any of claims 15 - 17 and 25 to said housing (4.1) ("processing interface"); and/or said housing (4.1) further comprises at least one interface (4.1.4) for fluidically connecting a separate chamber for incubating and detecting microparticles (3) according to any of claims 19 - 24 and 25 to said housing (4.1) ("incubating interface");
- wherein said valve (4.3) located at the lower end (4.2.2) of said fluid displacement chamber (4.2) allows to establish a single fluidic connection from said fluid displacement chamber (4.2) to either: a selected chamber of the plurality of chambers (4.1.2, 4.1.2', 4.1.2"), or to said at least one interface (4.1.3) for fluidically connecting said separate chamber for processing microparticles (1) according to any of claims 15 - 17 and 25, or to said at least one interface (4.1.4) for fluidically connecting said separate chamber for incubating and detecting microparticles (3) according to any of claims 19 - 24 and 25.
28. The liquid handling and processing tool according to claim 27, wherein said valve (4.3) located at the lower end (4.2.2) of said fluid displacement chamber (4.2) is configured to establish a series of single fluidic connections, namely one single fluidic connection at a given time, wherein, in said series of single fluidic connections, one single fluidic connection is established after another, wherein said one single fluidic connection is from said fluid displacement chamber (4.2) to a selected chamber of the plurality of chambers (4.1.2, 4.1.2', 4.1.2") or to one of said interfaces (4.1.3, 4.1.4), wherein preferably said valve (4.3) is a rotary valve.
29. The liquid handling and processing tool according to any of claims 27 - 28, further comprising a chamber for processing microparticles (1) according to any of claims 15 - 17, wherein said chamber for processing microparticles (1) is fluidically connected to said processing interface (4.1.3).
30.The liquid handling and processing tool according to any of claims 27 - 28, further comprising a chamber for incubating and detecting microparticles (3) according to any of claims 19 - 25, wherein said chamber for incubating and detecting microparticles (3) is fluidically connected to said incubating interface (4.1.4).
31. The liquid handling and processing tool according to any of claims 27 - 28, further comprising a chamber for processing microparticles (1) according to any of claims 15 - 17, wherein said chamber for processing microparticles (1) is fluidically connected to said processing interface (4.1.3); and further comprising a chamber for incubating and detecting microparticles (3) according to any of claims 19 - 24, wherein said chamber for incubating and detecting microparticles (3) is fluidically connected to said incubating interface (4.1.4).
32.The liquid handling and processing tool according to any of claims 29 - 31, further comprising a plurality of magnetic microparticles (5); wherein, preferably, said magnetic microparticles are located either in said chamber for processing microparticles (1) or in said chamber for incubating and detecting microparticles (3).
33.The liquid handling and processing tool according to any of claims 26 - 32, further comprising an aqueous phase and, separate therefrom, a non-aqueous phase.
34.A process for accommodating microparticles in a dense packing arrangement in a volume of a chamber for incubating and detecting microparticles (3), the process comprising:
a) providing, in any order, a chamber for incubating and detecting microparticles (3) according to any of claims 19 - 24 and 25, and a plurality of microparticles (5) dispersed in a liquid; wherein preferably, said liquid is a non-aqueous liquid, more preferably having an oil phase;
b) introducing said plurality of microparticles (5) dispersed in said liquid into said first compartment (3.1) of said chamber for incubating and detecting microparticles (3), and concentrating said microparticles in said first volume (3.1.1) of said first compartment (3.1) by making use of a density difference between said microparticles and said liquid surrounding said microparticles;
c) accommodating said plurality of microparticles (5) in a dense packing arrangement in said second volume (3.2.1) of said second compartment (3.2) of said chamber for incubating and detecting microparticles (3), by ejecting said concentrated microparticles from said first volume (3.1.1) of said first compartment (3.1) and introducing them into said second volume (3.2.1) of said second compartment (3.2) through said inlet opening (3.2.2); closing said outlet opening (3.2.3) when a first portion of said plurality of microparticles have reached said second volume (3.2.1) or said outlet opening(3.2.3), whilst continuing to eject said plurality of microparticles from said first volume (3.1.1) of said first compartment (3.1) into said second volume (3.2.1), thereby increasing a pressure within said second compartment (3.2), and closing said inlet opening (3.2.2) when all of said plurality of microparticles have been introduced into said second compartment (3.2).
35.The process according to claim 34, wherein for step b), a density of each of said microparticles is chosen such that it is different from a density of said liquid in which said microparticles are dispersed, and step b) involves allowing said microparticles to accumulate at an upper end (3.1.4) of said first volume (3.1) if said density of each of said microparticles is smaller than the density of said liquid in which said microparticles are dispersed; or step b) involves allowing said microparticles to accumulate at a lower end (3.1.5) of said first volume (3.1) if said density of each of said microparticles is larger than the density of said liquid in which said microparticles are dispersed.
36. The process according to any of claims 34 - 35, wherein said dense packing arrangement of step c) is a monolayer of microparticles, said microparticles being closely packed within said monolayer.
37. The process according to any of claims 34 - 36, wherein said chamber for incubating and detecting microparticles (3) is a chamber according to any of claims 21 - 24 and 25, and comprises a frame (3.2.4) encompassing said second volume (3.2.1), said frame (3.2.4) having side walls (3.2.4.1, 3.2.4.1'), an upper wall (3.2.4.2) and a lower wall (3.2.4.3) located opposite to said upper wall (3.2.4.2), said lower and upper wall being parallel to each other; said second volume (3.2.1) being enclosed by said side walls (3.2.4.1, 3.2.4.1'), said upper (3.2.4.2) and said lower wall (3.2.4.3); wherein one of said upper wall (3.2.4.2) and said lower wall (3.2.4.3) is a transparent wall configured to be interrogated by an optical sensor; and wherein the other of said upper and lower wall is a wall having low heat conduction resistivity and is configured to be contacted by a temperature regulating device;
wherein a number of microparticles dispersed in said liquid is chosen such that it does not exceed the maximum number of microparticles that can be arranged in a monolayer between said upper (3.2.4.2) and said lower wall (3.2.4.3) in said second compartment (3.2) which monolayer has the closest possible packing; or a number of microparticles dispersed in said liquid is chosen such that the microparticles, when arranged in a monolayer in the closest possible packing between said upper (3.2.4.2) and said lower wall (3.2.4.3) in said second compartment (3.2) , cover an area that is equal to or smaller than an area provided by said upper wall (3.2.4.2) or said lower wall (3.2.4.2).
